# EUROPEAN PATENT APPLICATION

(11) **EP 4 632 448 A1**
(43) Date of publication of application: **15.10.2025**
(21) Application number: 23900716.4
(22) Date of filing: 07.12.2023
(51) Int. Cl.: G02B 5/20, C09K 11/06

(54) **PRODUCTION METHOD FOR OPTICAL UPCONVERSION ORGANIC FILM, OPTICAL UPCONVERSION ORGANIC FILM PRODUCTION DEVICE, AND OPTICAL UPCONVERSION ORGANIC FILM**

(30) Priority: 09.12.2022 JP 2022197503
(71) Applicant: Idemitsu Kosan Co.,Ltd., Tokyo 100-8321 (JP); INSTITUTE OF SCIENCE TOKYO, Tokyo 152-8550 (JP)
(72) Inventor: MURAKAMI Yoichi, Tokyo 152-8550 (JP); ENOMOTO Riku, Tokyo 152-8550 (JP)
(74) Representative: Gille Hrabal Partnerschaftsgesellschaft mbB Patentanwälte
(86) International application number: PCT/JP2023/043780
(87) International publication number: WO 2024/122604

(57) **Abstract**

The following steps are performed: a precursor holding step (S1) of holding a powder precursor containing a triplet sensitizer and an organic luminescent material in a holding space having a predetermined height of a precursor holder; a pressing step (S2) of applying pressure to the powder precursor along a Z direction; and a temperature control step where a first temperature being a temperature of a first end of the powder precursor and a second temperature being a temperature of a second end thereof are raised by heating to or above a melting point of the organic luminescent material, and then are gradually lowered to below a coagulation point of the organic luminescent material while maintaining a temperature difference between the first and second temperatures, given that a -X-side end and a +X-side end of the powder precursor are defined as the first end and the second end, respectively.

## Description

### TECHNICAL FIELD

The present invention relates to a production method of an optical upconversion organic film, an optical upconversion organic film producing apparatus, and an optical upconversion organic film.

### BACKGROUND ART

Optical upconversion has attracted attention as a technology of converting low-energy light into high-energy light. For instance, Non-Patent Literature 1 has proposed the following mechanism. In a combination of a sensitizer (e.g., PtOEP) having a large intersystem crossing rate constant from the lowest singlet state to the lowest triplet state and luminous molecules (e.g., diphenylanthracene (DPA)), the lowest singlet state is generated by triplet-triplet annihilation (TTA) between the luminous molecules (DPA) that have been excited to the lowest triplet state by energy transfer from the sensitizer, and light emission occurs.

In addition to Non-Patent Literature 1, for instance, Patent Literatures 1 and 2 and Non-Patent Literatures 2 to 7 also describe technologies related to optical upconversion.

Furthermore, Non-Patent Literatures 6 and 7 disclose production of an optical upconversion organic film. Specifically, a sensitizer and luminescent molecules are dissolved in a solvent, and the solvent is then evaporated to mix the sensitizer and luminescent molecules. Subsequently, the mixture of the sensitizer and the luminescent molecules is dropped onto a substrate, heated in an inert atmosphere to be dissolved, and then rapidly cooled to produce an optical upconversion organic film.

### CITATION LIST

### PATENT LITERATURE(S)

Patent Literature 1: JP 2020-111751 A
Patent Literature 2: US 10,950,803 B2

### NON-PATENT LITERATURE(S)

Non-Patent Literature 1: Journal of Applied Physics, 101, 023101 (2007)
Non-Patent Literature 2: J. Phys. Chem. Lett., 2013, 4, 4113-4118
Non-Patent Literature 3: J. Phys. Chem. C, 2014, 118, 14256-14265
Non-Patent Literature 4: Mater. Horiz., 2017, 4, 83-87
Non-Patent Literature 5: J. Mater. Chem. C, 2018, 6, 5609-5615
Non-Patent Literature 6: J. Mater. Chem. C, 2014, 2, 2837-2841
Non-Patent Literature 7: ACS Appl. Mater. Interfaces 2016, 8, 15732-15740

### SUMMARY OF THE INVENTION

### PROBLEM(S) TO BE SOLVED BY THE INVENTION

In Non-Patent Literatures 6 and 7 mentioned above, the mixture of the sensitizer and the luminescent molecules is obtained by dissolving the sensitizer and the luminescent molecules in an organic solvent and then volatilizing the organic solvent. However, the use of organic solvents has concerns about its impact on the environment, and a more environmentally conscious method is desired.

Further, in the above-mentioned method of Non-Patent Literatures 6 and 7 in which the entire mixture is heated and then rapidly cooled, an optical upconversion organic film that is produced by being solidified from the melted material as amorphous glass has a low upconversion efficiency. Thus, high-quality optical upconversion organic films and a production method thereof are desired.

Further, the application of optical upconversion organic films is also being considered to utilize sunlight efficiently and effectively. Ultraviolet light (UV light) included in sunlight has high-energy photons and is used for various purposes. For instance, ultraviolet light is used for production of a photocatalyst for green hydrogen and hydrocarbons, photopolymerization, and disinfection. However, only about 4% of the photons included in sunlight on the ground constitute ultraviolet light, which hinders efficient and effective utilization of sunlight. Therefore, there is a demand for optical upconversion organic films that can efficiently convert visible light into ultraviolet light at an excitation threshold intensity equal to or lower than the intensity of sunlight on the earth.

An object of the invention is to provide a production method of an optical upconversion organic film having low environmental impact and capable of producing high-quality optical upconversion organic films, an optical upconversion organic film producing apparatus, and an optical upconversion organic film.

Another object of the invention is to provide an optical upconversion organic film capable of stable upconversion of light in the visible light region into light in the ultraviolet light region in the atmosphere, and exhibiting a high upconversion quantum efficiency at an excitation light intensity lower than the intensity of sunlight irradiated on the earth's surface (e.g., the excitation light intensity about 0.3 times the sunlight intensity).

### MEANS FOR SOLVING THE PROBLEM(S)

A production method of an optical upconversion organic film according to an aspect of the invention includes: holding a powder precursor containing a triplet sensitizer and an organic luminescent material in a holding space of a precursor holder, the holding space having a predetermined height; applying pressure to the powder precursor along a height direction of the holding space; and performing temperature control, in which a first temperature that is a temperature of a first end of the powder precursor and a second temperature that is a temperature of a second end of the powder precursor are raised by heating to or above a melting point of the organic luminescent material, and then are gradually lowered to below a coagulation point of the organic luminescent material while maintaining a temperature difference between the first temperature and the second temperature, given that a direction orthogonal to the height direction is defined as an axial direction, an end of the powder precursor close to one side of the axial direction is defined as the first end, and an end of the powder precursor close to the other side of the axial direction is defined as the second end.

**In** the production method of the optical upconversion organic film according to the aspect of the invention, it is preferable that a temperature-decrease rate to gradually decrease a temperature of the powder precursor is preset relative to the temperature difference, and the temperature-decrease rate is raised as the temperature difference increases.

A production method of an optical upconversion organic film according to another aspect of the invention includes: holding a powder precursor containing a triplet sensitizer and an organic luminescent material in a holding space of a precursor holder, the holding space having a predetermined height; applying pressure to the powder precursor along a height direction of the holding space; and performing temperature control, in which given that a direction orthogonal to the height direction is defined as an axial direction, a heating member having a temperature gradient from a high temperature range to a low temperature range along the axial direction is moved in the axial direction relative to the precursor holder, the high temperature range being at or above a melting point of the organic luminescent material, the low temperature range being below a coagulation point of the organic luminescent material.

In the production method of the optical upconversion organic film according to the above aspects of the invention, it is preferable that in the applying the pressure to the powder precursor, an environment where the precursor holder is installed is decompressed and the pressure is applied to the powder precursor.

In the production method of the optical upconversion organic film according to the above aspects of the invention, a crystal of the organic luminescent material preferably has uniaxial orientation.

In the production method of the optical upconversion organic film according to the above aspects of the invention, it is preferable that the organic luminescent material contains an oxazole derivative, and the triplet sensitizer contains a coumarin derivative.

An optical upconversion organic film producing apparatus according to still another aspect of the invention includes a precursor holder having a holding space with a predetermined height, and configured to hold a powder precursor containing a triplet sensitizer and an organic luminescent material in the holding space; a pair of clamping sections configured to clamp the precursor holder in a height direction; a press section configured to apply pressure so that at least one of the pair of clamping sections is pressed toward the other of the pair of clamping sections; and a first heating mechanism configured to raise a first temperature of the powder precursor and a second temperature of the powder precursor by heating to be different temperatures from each other to generate a temperature gradient along an axial direction, given that a direction orthogonal to the height direction is defined as the axial direction, an end of the powder precursor close to one side of the axial direction is defined as a first end, an end of the powder precursor close to the other side of the axial direction is defined as a second end, a temperature of the first end is defined as the first temperature, and a temperature of the second end is defined as the second temperature, in which the first heating mechanism is configured to raise the first temperature and the second temperature by heating to or above a melting point of the organic luminescent material, and then to gradually lower the first temperature and the second temperature to below a coagulation point of the organic luminescent material while maintaining a temperature difference between the first temperature and the second temperature.

In the optical upconversion organic film producing apparatus according to the still another aspect of the invention, it is preferable that the first heating mechanism includes a first heating section provided at one side of the clamping sections in the axial direction, a second heating section provided at the other side of the clamping sections in the axial direction, and configured to be drivable independently of the first heating section, and a cooling section provided at the other side of the clamping sections in the axial direction and configured to cool the second end.

In the optical upconversion organic film producing apparatus according to the still another aspect of the invention, it is preferable that the first heating section includes a first rod heater embedded in one side of each of the pair of the clamping sections in the axial direction, and the second heating section includes a second rod heater embedded in the other side of each of the pair of the clamping sections in the axial direction.

In the optical upconversion organic film producing apparatus according to the still another aspect of the invention, it is preferable that the precursor holder includes a pair of substrates spaced apart in the height direction via a spacer, and the holding space is formed by a gap between the pair of substrates, and the precursor holder and a buffer member are provided between the pair of clamping sections, the buffer member configured to absorb a stress in the height direction.

Preferably, the optical upconversion organic film producing apparatus according to the still another aspect of the invention further includes: a decompression mechanism configured to maintain an environment surrounding the precursor holder, the pair of clamping sections, the press section, and the first heating mechanism in a decompressed state.

Preferably, the optical upconversion organic film producing apparatus according to the still another aspect of the invention further includes: heat insulators provided in contact with respective surfaces of the pair of clamping sections, the respective surfaces being opposite to surfaces of the pair of clamping sections between which the precursor holder is clamped.

An optical upconversion organic film producing apparatus according to yet another aspect of the invention includes: a precursor holder having a holding space with a predetermined height, and configured to hold a powder precursor containing a triplet sensitizer and an organic luminescent material in the holding space; a pair of guide sections being members configured to sandwich the precursor holder by pressing the precursor holder in a height direction, the pair of guide sections being configured to guide the precursor holder so that the precursor holder is relatively movable along an axial direction, given that a direction orthogonal to the height direction is defined as the axial direction; a second heating mechanism configured to heat the pair of guide sections to generate a temperature gradient from a high temperature range to a low temperature range along the axial direction, the high temperature range being at or above a melting point of the organic luminescent material, the low temperature range being below a coagulation point of the organic luminescent material; and a moving mechanism configured to move the precursor holder in the axial direction relative to the pair of guide sections.

In the optical upconversion organic film producing apparatus according to the yet another aspect of the invention, it is preferable that the precursor holder includes a pair of substrates spaced apart in the height direction via a spacer, and the holding space is formed by a gap between the pair of substrates, the pair of guide sections are a pair of guide plates configured to sandwich the precursor holder in the height direction, the second heating mechanism is configured to heat the pair of guide plates to generate the temperature gradient in which portions facing each other of the pair of guide plates are at an identical temperature, and the moving mechanism is configured to move the precursor holder relative to the pair of guide sections by press-fitting the precursor holder between the pair of guide palates in the axial direction.

In the optical upconversion organic film producing apparatus according to the yet another aspect of the invention, it is preferable that the precursor holder includes a pair of substrates spaced apart in the height direction via a spacer, and a pair of support plates configured to sandwich the pair of substrates, a length in the axial direction of the pair of support plates being longer than that of the pair of substrates, and the holding space is formed by a gap between the pair of substrates, the pair of guide sections include roller pairs arranged in the axial direction, each of the roller pairs including rollers paired in the height direction and configured to rotate around a rotation axis orthogonal to the height direction and the axial direction, and the precursor holder is sandwiched between the rollers provided as a pair in the height direction, the moving mechanism is configured to rotate the rollers to move the precursor holder in the axial direction relative to the pair of guide sections, and the second heating mechanism is configured to individually control a temperature of each of the roller pairs arranged in the axial direction so that the roller pairs are arranged in order from the roller pair of the high temperature range to the roller pair of the low temperature range along the axial direction.

In the optical upconversion organic film producing apparatus according to the yet another aspect of the invention, it is preferable that the second heating mechanism is configured to heat the pair of guide sections so that the temperature gradient is generated in an order of the low temperature range, the high temperature range and the low temperature range along the axial direction.

According to further aspect of the invention, an optical upconversion organic film is provided that includes: a triplet sensitizer; and an organic luminescent material, in which the organic luminescent material has ultraviolet luminescence, and the optical upconversion organic film is a film having crystallinity.

In the optical upconversion organic film according to the further aspect of the invention, it is preferable that the triplet sensitizer absorbs excitation light to generate excited triplet excitons, and the organic luminescent material emits light having a maximum peak in a shorter wavelength region relative to a local maximum peak wavelength closest to a long-wavelength region in an absorption spectrum of the triplet sensitizer, the shorter wavelength region being a wavelength region of 400 nm or less.

In the optical upconversion organic film according to the further aspect of the invention, a crystal of the organic luminescent material preferably has uniaxial orientation.

In the optical upconversion organic film according to the further aspect of the invention, the organic luminescent material preferably contains an oxazole derivative.

In the optical upconversion organic film according to the further aspect of the invention, a fluorescence quantum yield of the organic luminescent material is preferably 40% or more.

In the optical upconversion organic film according to the further aspect of the invention, the triplet sensitizer preferably contains no metal atom in a molecule.

In the optical upconversion organic film according to the further aspect of the invention, the triplet sensitizer preferably contains in a molecule only a hydrogen atom, a carbon atom, an oxygen atom, and a nitrogen atom.

In the optical upconversion organic film according to the further aspect of the invention, the triplet sensitizer preferably contains a coumarin derivative.

In the optical upconversion organic film according to the further aspect of the invention, a molar ratio of the triplet sensitizer to the organic luminescent material is preferably in a range from 1:1,000 to 1:100,000.

According to the above aspects of the invention, it is possible to provide a production method of an optical upconversion organic film having low environmental impact and capable of producing high-quality optical upconversion organic films, an optical upconversion organic film producing apparatus, and an optical upconversion organic film.

According to the above aspects of the invention, it is possible to provide an optical upconversion organic film capable of stable upconversion of light in the visible light region into light in the ultraviolet light region in the atmosphere, and exhibiting a high upconversion quantum efficiency at an excitation light intensity lower than the intensity of sunlight irradiated on the earth's surface (e.g., the excitation light intensity about 0.3 times the sunlight intensity).

### BRIEF DESCRIPTION OF DRAWINGS

Fig. 1 illustrates a schematic configuration of an organic film producing apparatus according to a first exemplary embodiment.
Fig. 2 is a block diagram illustrating a schematic arrangement of the organic film producing apparatus according to the first exemplary embodiment.
Fig. 3 is an enlarged cross-sectional view of a precursor holder and holding portions of a pair of clamping sections for holding the precursor holder in the first exemplary embodiment.
Fig. 4 is a flowchart of a production method of an optical upconversion organic film of the first exemplary embodiment.
Fig. 5 illustrates a temperature change of the pair of clamping sections in a temperature control step of the first exemplary embodiment.
Fig. 6 illustrates a state of a powder precursor whose temperature is decreasing in the temperature control step of the first exemplary embodiment.
Fig. 7 illustrates a schematic configuration of an organic film producing apparatus according to a second exemplary embodiment.
Fig. 8 illustrates a schematic configuration of an organic film producing apparatus according to a modified example of the second exemplary embodiment.
Fig. 9 is a flowchart of a production method of an optical upconversion organic film of the second exemplary embodiment.
Fig. 10 illustrates a schematic configuration of an organic film producing apparatus according to a third exemplary embodiment.
Fig. 11 is a flowchart of a production method of an optical upconversion organic film of the third exemplary embodiment.
Fig. 12 schematically illustrates an upconversion mechanism in an optical upconversion organic film.
Fig. 13A illustrates a temperature change of the pair of clamping sections when an optical upconversion organic film according to Example 1 is formed.
Fig. 13B illustrates a temperature change of the pair of clamping sections when an optical upconversion organic film according to Example 2 is formed.
Fig. 13C illustrates a temperature change of the pair of clamping sections when an optical upconversion organic film according to Example 3 is formed.
Fig. 13D illustrates a temperature change of the pair of clamping sections when an optical upconversion organic film according to Example 4 is formed.
Fig. 13E illustrates a temperature change of the pair of clamping sections when an optical upconversion organic film according to Example 5 is formed.
Fig. 14 is a view of optical microscope images of the respective optical upconversion organic films of Examples.
Fig. 15 illustrates powder X-ray diffraction (PXRD) patterns of PPO powder and the optical upconversion organic films.
Fig. 16 illustrates a crystal structure of PPO obtained by Pawley analysis and Rietveld analysis.
Fig. 17 illustrates photophysical properties of the optical upconversion organic films and CBDAC.
Fig. 18A schematically illustrates a device for measuring the photophysical properties.
Fig. 18B is an enlarged cross-sectional view of a sample used in the photophysical measurement.
Fig. 19A is a diagram illustrating dependency of optical upconversion quantum efficiency on an excitation intensity at a wavelength of 440 nm.
Fig. 19B is another diagram illustrating dependency of optical upconversion quantum efficiency on an excitation intensity at a wavelength of 440 nm.
Fig. 20 is a graph illustrating a relationship between an excitation threshold intensity (Iₜₕ) of the optical upconversion organic film and a molar ratio M_{A}/M_{S} of an organic luminescent material to a triplet sensitizer.
Fig. 21 is a graph illustrating sunlight intensity dependency of the optical upconversion luminous intensity.
Fig. 22 is a graph illustrating photostability of the optical upconversion organic film.
Fig. 23 is a schematic diagram of an experimental method giving an example of practicality of the optical upconversion organic film.

### DESCRIPTION OF EMBODIMENT(S)

### First Exemplary Embodiment

An optical upconversion organic film producing apparatus and a production method of an optical upconversion organic film according to a first exemplary embodiment of the invention will be described below. The optical upconversion organic film producing apparatus is simply referred to as an organic film producing apparatus.

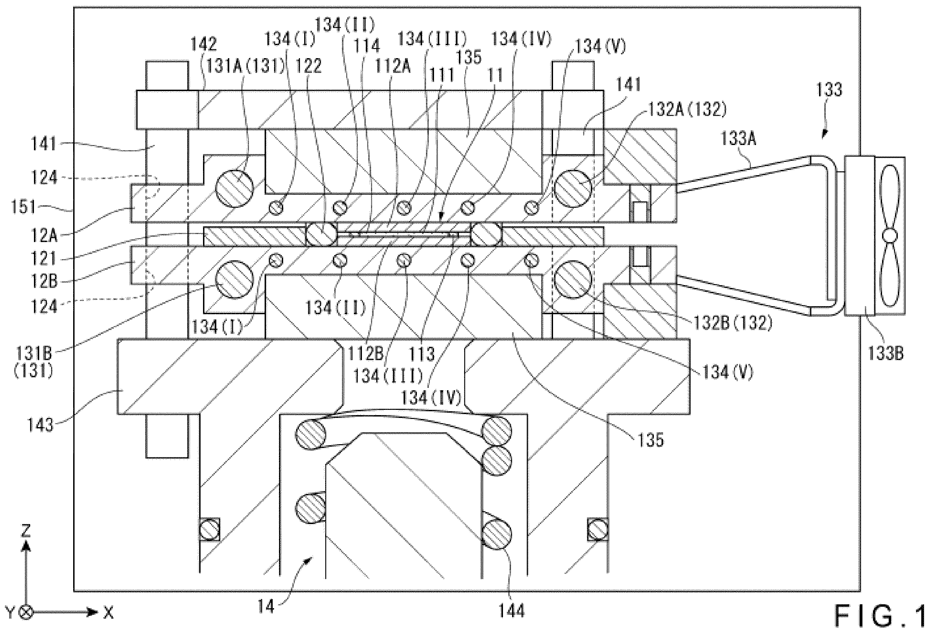

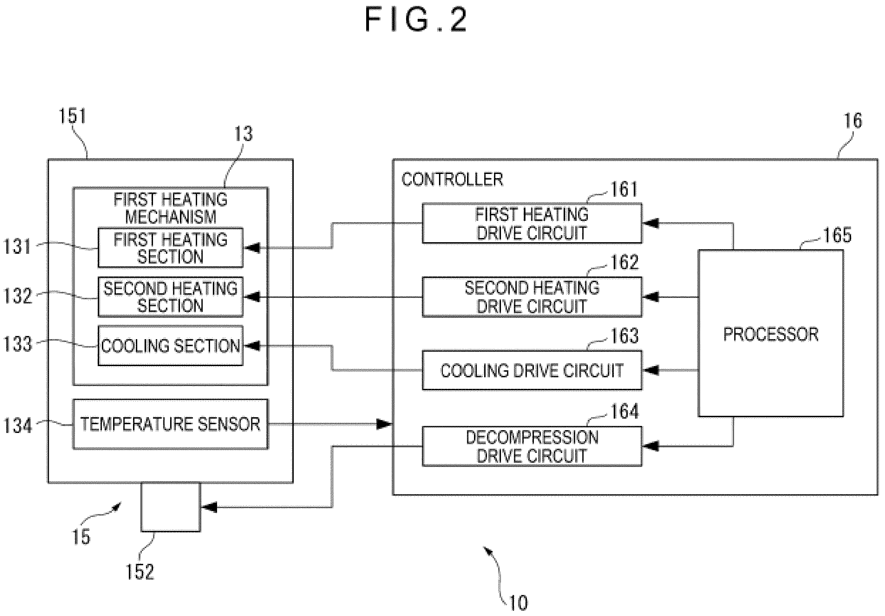

Fig. 1 is a cross-sectional view illustrating a schematic configuration of an organic film producing apparatus 10 according to the present exemplary embodiment. Fig. 2 is a block diagram of the organic film producing apparatus 10 according to the present exemplary embodiment.

The organic film producing apparatus 10 of the present exemplary embodiment is a production apparatus for producing optical upconversion organic films. As illustrated in Fig. 1, the organic film producing apparatus 10 includes a precursor holder 11, a pair of clamping sections (a first clamping section 12A and a second clamping section 12B) for clamping the precursor holder 11, a first heating mechanism 13 (see Fig. 2), a press mechanism 14, a decompression mechanism 15 (see Fig. 2), and a controller 16 (see Fig. 2) for controlling the first heating mechanism 13.

The precursor holder 11 holds a powder precursor 111 for forming an optical upconversion organic film. The powder precursor 111 is a powder containing a triplet sensitizer and an organic luminescent material, and in the present exemplary embodiment, the powder precursor 111 is used in which a molar ratio of the triplet sensitizer to the organic luminescent material is in a range from 1:1,000 to 1:100,000. In the present exemplary embodiment, as an example, a powder of CBDAC (3,3-carbonylbis(7-diethylaminocoumarin)) is used as the triplet sensitizer, and a powder of PPO (2,5-diphenyloxazole) having a crystal of uniaxial orientation is used as the organic luminescent material. The triplet sensitizer and the organic luminescent material usable in the producing apparatus and production method of the present exemplary embodiment are not limited to the examples of CBDAC and PPO, and can be selected from, for instance, triplet sensitizers and organic luminescent materials listed in a fourth exemplary embodiment described later.

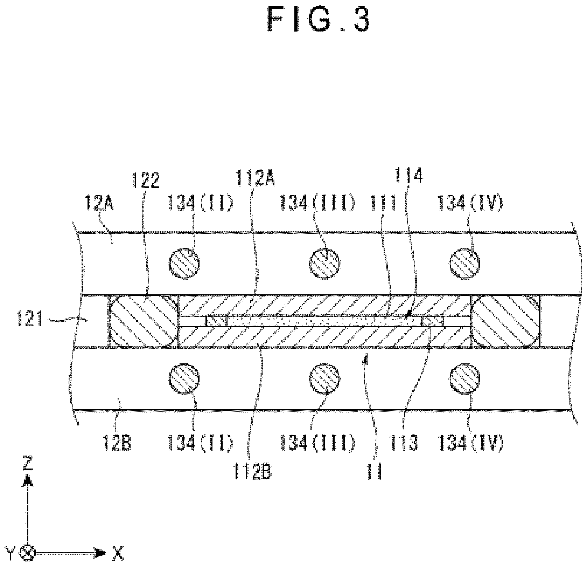

Fig. 3 is an enlarged cross-sectional view of the precursor holder 11 and holding portions of the pair of clamping sections 12A and 12B for holding the precursor holder 11.

As illustrated in Fig. 3, the precursor holder 11 includes a pair of glass substrates 112A and 112B, and a spacer 113 for maintaining a predetermined distance between the pair of glass substrates 112A and 112B. A space defined by the glass substrates 112A and 112B and the spacer 113, i.e., a gap between the pair of glass substrates 112A and 112B, forms a holding space 114 in which the powder precursor 111 is housed.

Here, surfaces of the pair of glass substrates 112A and 112B facing each other are in an XY plane, and a direction orthogonal to the XY plane is defined as a Z direction.

The first clamping section 12A and the second clamping section 12B are members configured to sandwich the precursor holder 11 in the Z direction. The first clamping section 12A is disposed on a +Z side of the precursor holder 11 and the second clamping section 12B is disposed on a -Z side of the precursor holder 11. The first clamping section 12A and the second clamping section 12B are preferably made of a material with high thermal conductivity such as metal.

The surface of the first clamping section 12A facing the second clamping section 12B and the surface of the second clamping section 12B facing the first clamping section 12A, which are in the XY plane, face the glass substrates 112A and 112B, respectively. A holder 121 that holds the precursor holder 11 is placed between the first clamping section 12A and the second clamping section 12B. The holder 121 may be, for instance, provided integrally with the first clamping section 12A or the second clamping section 12B.

The holder 121 has a recess or through hole for holding the precursor holder 11, for instance, in the center in the XY plane. An O-ring 122 is placed in the recess or through hole of the holder 121 as a buffer member when the precursor holder 11 is clamped between the first clamping section 12A and the second clamping section 12B. The precursor holder 11 is placed at an inner diameter side surrounded by the O-ring 122.

The O-ring 122 has a thickness in the Z direction equal to or greater than a height of the holder 121 in the Z direction, and elastically deformable to the same thickness as the precursor holder 11 by being clamped and pressed by the first clamping section 12A and the second clamping section 12B. Accordingly, when the precursor holder 11 is held by the first clamping section 12A and the second clamping section 12B, a space at the inner diameter side of the O-ring 122 becomes airtight and is maintained under a decompression environment by being decompressed by the decompression mechanism 15 described later.

The first heating mechanism 13 controls the temperature of the first clamping section 12A and the second clamping section 12B.

Here, assuming that one axial direction along the XY plane is an X direction, the first heating mechanism 13 includes a first heating section 131 provided on one side in the X direction (a -X side) of the first clamping section 12A and the second clamping section 12B, a second heating section 132 provided on the other side in the X direction (a +X side) of the first clamping section 12A and the second clamping section 12B, and a cooling section 133 connected to the first clamping section 12A and the second clamping section 12B on the +X side in the X direction.

The first heating section 131 is a member for heating the -X side of the first clamping section 12A and the second clamping section 12B. As illustrated in Fig. 1, the first heating section 131 includes first rod heaters 131A and 131B that are embedded in the first clamping section 12A and the second clamping section 12B, respectively, on the -X side from the holder 121. The first rod heater 131A embedded in the first clamping section 12A and the first rod heater 131B embedded in the second clamping section 12B are located at the same position in the X direction and are arranged along the Z direction. The first rod heaters 131A and 131B are controlled to the same temperature, for instance, by being connected to the same drive circuit.

The second heating section 132 is a member for heating the +X side of the first clamping section 12A and the second clamping section 12B. As illustrated in Fig. 1, the second heating section 132 includes second rod heaters 132A and 132B embedded in the first clamping section 12A and the second clamping section 12B, respectively, on the +X side from the holder 121. The second rod heater 132A embedded in the first clamping section 12A and the second rod heater 132B embedded in the second clamping section 12B are located at the same position in the X direction and are arranged along the Z direction. The second rod heaters 132A and 132B are controlled to the same temperature, for instance, by being connected to the same drive circuit. In addition, the second rod heaters 132A and 132B are driven by a drive circuit independent of the drive circuit for the first rod heaters 131A and 131B that constitute the first heating section 131, and the temperature of the second rod heaters 132A and 132B are controllable to be different from that of the first heating section 131.

The cooling section 133 includes a heat transfer portion 133A and a cooling element 133B.

The heat transfer portion 133A is a member with high thermal conductivity connected to the first clamping section 12A and the second clamping section 12B on the +X side, and is made of metal foil such as copper foil.

The cooling element 133B cools the heat transferred to the heat transfer portion 133A. An element whose cooling efficiency can be appropriately controlled is preferably used as the cooling element 133B, examples of which include a Peltier element, a fan or heat sink that uses air or water cooling.

The first clamping section 12A and the second clamping section 12B each include a plurality of temperature sensors 134(I) to 134(V) along the X direction. Examples of the temperature sensors 134(I) to 134(V) include thermocouples embedded inside the first clamping section 12A and the second clamping section 12B.

The first clamping section 12A and the second clamping section 12B are sandwiched between a pair of heat insulators 135 in the Z direction. Specifically, the heat insulators 135 are disposed at the +Z side of the first clamping section 12A and at the -Z side of the second clamping section 12B, respectively, at positions that overlap the holder 121 when viewed from the Z direction.

In the first heating mechanism 13 as described above, it is possible to individually control the heating temperature in the first heating section 131, the heating temperature in the second heating section 132, and the cooling temperature in the cooling section 133. With this configuration, a temperature gradient along the X direction can be generated in the first clamping section 12A and the second clamping section 12B, and control for raising and lowering the overall temperature of the first clamping section 12A and the second clamping section 12B can be performed while maintaining a temperature difference ΔT constant between the ±X sides of the first clamping section 12A and the second clamping section 12B. The term "constant" used herein is not limited to a strict temperature difference ΔT but allows an error within a predetermined range, and it is sufficient that the temperature difference ΔT is approximately constant in the control for raising and lowering the overall temperature.

In addition, by holding the first clamping section 12A and the second clamping section 12B between the heat insulators 135, heat loss due to heat dissipation in a region between the first heating section 131 and the second heating section 132 (positions that overlap the precursor holder 11 in the Z direction) is inhibited.

The press mechanism 14 corresponds to a press section of the invention, and applies pressure so that the first clamping section 12A and the second clamping section 12B approach each other. Specifically, the press mechanism 14 applies pressure so that the glass substrates 112A and 112B of the precursor holder 11 clamped by the first clamping section 12A and the second clamping section 12B approach each other, thereby applying a load onto the powder precursor 111 in the holding space 114.

Here, the press mechanism 14 may be configured to apply pressure so that both the first clamping section 12A and the second clamping section 12B approach each other, or may be configured to apply pressure so that one of the first clamping section 12A and the second clamping section 12B is pressed toward the other.

In the present exemplary embodiment, as illustrated in Fig. 1, through holes 124 penetrating in the Z direction are formed at ±X-side ends of the first clamping section 12A and the second clamping section 12B, and fixed shafts 141 are inserted through the through holes 124. The fixed shafts 141 have +Z-side ends fixed to a fixed stage 142.

The fixed shaft 141 penetrates a movable stage 143, and the heat insulator 135 at the +Z side, the first clamping section 12A, the second clamping section 12B, and the heat insulator 135 at the -Z side are sandwiched between the movable stage 143 and the fixed stage 142. A biasing member 144 such as a spring that biases the movable stage 143 toward the fixed stage 142 is disposed on the -Z side of the movable stage 143, and a biasing force of the biasing member 144 presses the movable stage 143 toward the fixed stage 142. Accordingly, as described above, the precursor holder 11 is clamped in the Z direction by the first clamping section 12A and the second clamping section 12B, and the powder precursor 111 sandwiched between the pair of glass substrates 112A and 112B is pressed in the Z direction. In addition, the heat insulators 135 in contact with the first clamping section 12A and the second clamping section 12B, respectively, inhibit heat loss.

An arrangement in which the biasing member 144 presses the movable stage 143 toward the fixed stage 142 is exemplified in the present exemplary embodiment. However, the movable stage 143 may be pressed toward the fixed stage 142 by a driving force output from a drive source such as a motor.

The decompression mechanism 15 includes a vacuum chamber 151 and a vacuum pump 152, as illustrated in Fig. 2. In the present exemplary embodiment, the first clamping section 12A, the second clamping section 12B, the first heating mechanism 13, the press mechanism 14, and the precursor holder 11 are disposed in the vacuum chamber 151. The decompression mechanism 15 discharges gas from the vacuum chamber 151 using the vacuum pump 152, thereby placing the inside of the vacuum chamber 151 in a decompressed state, preferably a vacuum state.

In the present exemplary embodiment, in a process of bringing the first clamping section 12A and the second clamping section 12B close to each other using the press mechanism 14, the inside of the vacuum chamber 151 is decompressed to discharge air between the pair of glass substrates 112A and 112B of the precursor holder 11. This maintains the airtight space surrounded by the O-ring 122 in a decompressed state (preferably a vacuum state), making it possible to inhibit mixing of air bubbles when the powder precursor 111 is melted to form an optical upconversion organic film. Thus, the optical upconversion organic film with higher quality is producible.

The controller 16 controls the first heating mechanism 13, the press mechanism 14, and the decompression mechanism 15, as illustrated in Fig. 2.

Specifically, the controller 16 includes a first heating drive circuit 161 connected to the first heating section 131, a second heating drive circuit 162 connected to the second heating section 132, a cooling drive circuit 163 connected to the cooling section 133, a decompression drive circuit 164 for controlling the vacuum pump 152, and a processor 165 for outputting control signals to these drive circuits. If the press mechanism 14 applies pressure to the powder precursor 111 using a drive source such as a motor, a drive circuit for controlling the drive source may be provided.

Since the first heating drive circuit 161 and the second heating drive circuit 162 are independent of each other, the heating temperature by the first heating section 131 and the heating temperature by the second heating section 132 can be each independently controlled, allowing the temperature gradient to be generated along an X-axis direction, as described above.

The decompression drive circuit 164 drives the vacuum pump 152 to decompress the inside of the vacuum chamber 151.

As described above, the processor 165 raises and lowers the overall temperature of the first clamping section 12A and the second clamping section 12B while maintaining the temperature difference ΔT between the heating temperature by the first heating section 131 and the heating temperature by the second heating section 132. At this time, it is preferable that the processor 165 controls the cooling drive circuit 163 on the basis of the temperature measured by each of the temperature sensors 134(I) to 134(V) and feedback-controls the cooling efficiency of the cooling section 133.

### Production Method of Optical Upconversion Organic Film

Next, a production method of an optical upconversion organic film using the above-described organic film producing apparatus 10 will be described.

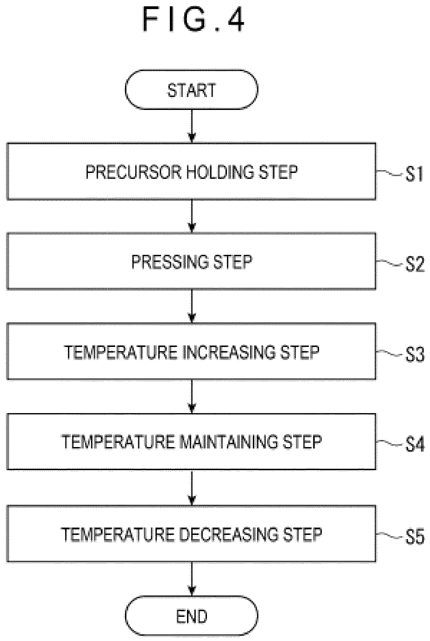

Fig. 4 is a flowchart of a production method of the optical upconversion organic film of the present exemplary embodiment.

In the present exemplary embodiment, when producing the optical upconversion organic film, first, the powder precursor 111 is prepared and held in the precursor holder 11 (Step S1: a precursor holding step).

The powder precursor 111 is a powder containing the triplet sensitizer and the organic luminescent material as described above. Then, the gap (holding space 114) between the pair of glass substrates 112A and 112B facing each other via the spacer 113 is filled with the thus-prepared powder precursor 111.

Next, the precursor holder 11 is set in the holder 121, and the second clamping section 12B is biased toward the first clamping section 12A by the biasing member 144 (Step S2: a pressing step). The powder precursor 111 held between the pair of glass substrates 112A and 112B is thus pressed in the Z direction.

In addition, in Step S2, the inside of the vacuum chamber 151 is decompressed by the decompression mechanism 15, and the powder precursor 111 is pressed under a decompressed state.

Thereafter, the controller 16 controls the first heating mechanism 13 through the first heating drive circuit 161, the second heating drive circuit 162, and the cooling drive circuit 163 to heat the first clamping section 12A and the second clamping section 12B, thereby performing a temperature control step of controlling the temperature of the powder precursor 111.

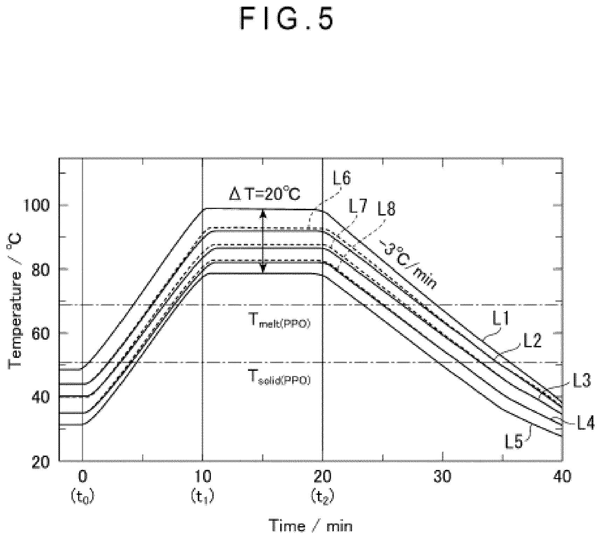

Fig. 5 illustrates a temperature change of the first clamping section 12A and the second clamping section 12B in the temperature control step. In Fig. 5, a line L1 indicates the temperature measured by the temperature sensor 134(I) of the first clamping section 12A located at a -X-side end. A line L2 indicates the temperature measured by the temperature sensor 134(II) of the first clamping section 12A located second from the -X side. A line L3 indicates the temperature measured by the temperature sensor 134 (III) of the first clamping section 12A located third from the - X side (i.e., in the center). A line L4 indicates the temperature measured by the temperature sensor 134 (IV) of the first clamping section 12A located second from the +X side. A line L5 indicates the temperature measured by the temperature sensor 134 (V) of the first clamping section 12A located at the +X-side end. A line L6 indicates the temperature measured by the temperature sensor 134 (II) of the second clamping section 12B located second from the -X side.
A line L7 indicates the temperature measured by the temperature sensor 134 (III) of the second clamping section 12B located third from the -X side. A line L8 indicates the temperature measured by the temperature sensor 134 (IV) of the second clamping section 12B located second from the +X side.

In the temperature control step, first, the processor 165 raises the temperature of the pair of clamping sections (the first clamping section 12A and the second clamping section 12B) at least to or above a melting point T_{melt(PPO)} of the organic luminescent material (PPO) (Step S3: t₀ to t₁ in Fig. 5) in order to melt the powder precursor 111. At this time, the processor 165 raises the temperature of the first clamping section 12A and the second clamping section 12B at, for instance, a temperature-increase rate of 5 degrees C/min so that the temperature difference ΔT between the -X-side ends and the +X-side ends of the pair of clamping sections (the first clamping section 12A and the second clamping section 12B) is constant.

Here, the temperature of a -X-side end (first end) of the powder precursor 111 held by the precursor holder 11 is indicated by the line L2 measured by the temperature sensor 134(II), and the temperature of a +X-side end (second end) of the powder precursor 111 is indicated by the line L4 measured by the temperature sensor 134(IV). If the temperature of the second heating section 132, which is set lower than that of the first heating section 131, is at or above the melting point T_{melt(PPO)}, the temperature of a portion where the powder precursor 111 is placed (the portion corresponding to the temperature sensors 134(II) to 134(IV)) is at or above the melting point T_{melt(PPO)}.

In the present exemplary embodiment, the temperatures of the pair of clamping sections 12A and 12B are raised and lowered while maintaining the temperature difference ΔT constant between both ends of the pair of clamping sections. In this case, the temperature of the powder precursor 111 is raised and lowered also while maintaining a temperature difference ΔT' constant between the temperature of the -X-side end of the powder precursor 111 (a first temperature measured by the temperature sensor 134(II)) and the temperature of the +X-side end of the powder precursor 111 (a second temperature measured by the temperature sensor 134(IV)). In other words, an operation of raising and lowering the temperature of the pair of clamping sections 12A and 12B while maintaining the temperature difference ΔT is the same as an operation of raising and lowering the temperature of the powder precursor 111 while maintaining the temperature difference ΔT' between the first temperature at the -X-side end of the powder precursor 111 and the second temperature at the +X-side end thereof.

Next, the processor 165 maintains the temperatures of the first heating section 131 and the second heating section 132 for a predetermined time (Step S4: t₁ to t₂ in Fig. 5). The powder precursor 111 held in the precursor holder 11 is thereby melted. The time of Step S4, which is the time required for melting the powder precursor 111, can be set appropriately depending on an amount of the powder precursor 111 held in the precursor holder 11, types of the triplet sensitizer and the organic luminescent material contained in the powder precursor 111, the molar ratio therebetween, and the like.

Thereafter, the processor 165 lowers the temperatures of the first heating section 131 and the second heating section 132 at a predetermined temperature-decrease rate while maintaining the temperature difference ΔT between the first heating section 131 and the second heating section 132 (Step S5: from t₂ onward in Fig. 5).

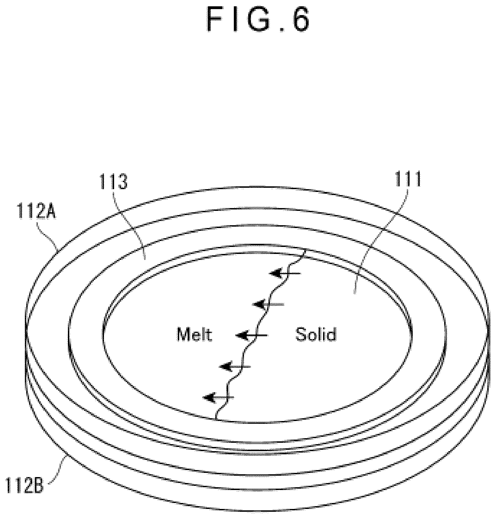

Fig. 6 illustrates a state of the powder precursor 111 whose temperature is decreasing in Step S5.

In the present exemplary embodiment, the temperatures of the first heating section 131 and the second heating section 132 are lowered while maintaining the temperature difference ΔT, so that the temperature of the powder precursor 111 is lowered while the temperature gradient is generated, as illustrated in Fig. 6. Thus, the powder precursor 111 is cooled to a temperature less than a coagulation point T_{solid(PPO)} from the +X side to the -X side in sequence. In the present exemplary embodiment, PPO having uniaxial orientation is used as the organic luminescent material. Therefore, the powder precursor 111 melted along the X axis, which is a direction of the temperature gradient, is sequentially cooled and crystallized.

The temperature-decrease rate in Step S5 is appropriately set on the basis of the temperature difference ΔT (or temperature difference ΔT') in addition to the types and molar ratio of the triplet sensitizer and the organic luminescent material contained in the powder precursor 111 held in the precursor holder 11. For instance, in the present exemplary embodiment, CBDAC and PPO are used as the triplet sensitizer and the organic luminescent material, respectively, the molar ratio is 1:30,000, and the temperature gradient along the X direction is 20 degrees C/24 mm (= 0.83 degrees C/mm). If a length along the X direction from the first heating section 131 to the second heating section 132 is 24 mm, the temperature difference ΔT may be set at 20 degrees C. In this case, the temperature-decrease rate is preferably set at -3 degrees C/min. By raising the temperature-decrease rate as the temperature difference ΔT (or the temperature difference ΔT') increases, similar crystal growth can be achieved.

In this manner, the optical upconversion organic film having crystal orientation along the X direction is produced.

In the present exemplary embodiment, a plurality of temperature sensors, the temperature sensors 134(I) to 134(V) are arranged along the X direction. This arrangement allows for the feedback-control on the heating temperature of the first heating section 131, the heating temperature of the second heating section 132, and the cooling efficiency of the cooling section 133 in the temperature control step from Steps S3 to S5 so that the temperature measured by each of the temperature sensors 134(I) to 134(V) is a desired temperature. The temperature difference ΔT and the temperature difference ΔT' can be thus controlled with high precision.

### Effects of First Exemplary Embodiment

In the production method of the optical upconversion organic film of the present exemplary embodiment, the precursor holding step (Step S1), the pressing step (Step S2), and the temperature control step (Steps S3 to S5) are performed.

In the precursor holding step, the powder precursor 111 containing the triplet sensitizer and the organic luminescent material is held in the holding space 114 having a predetermined height formed in the precursor holder 11.

In the pressing step, the powder precursor 111 is pressed along the height direction (Z direction) of the holding space 114.

In the temperature control step, the first temperature at the -X-side end of the powder precursor 111 and the second temperature at the +X-side end thereof are raised by heating to or above the melting point T_{melt(PPO)} of the organic luminescent material (Steps S3 to S4), and then the first temperature and the second temperature are gradually lowered to below the coagulation point T_{solid(PPO)} of the organic luminescent material while maintaining the temperature difference ΔT' between the first temperature and the second temperature (Step S5).

In the above-described production method of the optical upconversion organic film, the melted powder precursor 111 is cooled to below the coagulation point T_{solid(PPO)} in sequence from the +X side in Step S5, and the optical upconversion organic film with a crystal grown along a uniaxial direction is producible. This allows for the production of the high-quality optical upconversion organic film with a high optical upconversion efficiency.

In addition, in the present exemplary embodiment, unlike typical methods, it is not necessary to drop an organic solvent, in which a triplet sensitizer and an organic luminescent material are dissolved, onto a substrate and to volatilize the organic solvent. That is, since the use of an organic solvent is unnecessary, environmental impact in producing optical upconversion organic films can be reduced.

In the present exemplary embodiment, the temperature-decrease rate for gradually decreasing the temperature of the powder precursor 111 is preset relative to the temperature difference ΔT (or the temperature difference ΔT'), and the temperature-decrease rate is raised as the temperature difference ΔT (or the temperature difference ΔT') increases.

Accordingly, crystallization of the melted powder precursor 111 can be appropriately induced, and the optical upconversion organic film with higher quality is producible.

In the pressing step (Step S2) of the present exemplary embodiment, an environment where the precursor holder 11 is installed is decompressed by the decompression mechanism 15, and the powder precursor 111 is pressed.

This makes it possible to inhibit air bubbles from mixing into the optical upconversion organic film that is to be crystallized in the temperature control step. Thus, the optical upconversion organic film with higher quality is producible.

In the present exemplary embodiment, the crystal of the organic luminescent material has uniaxial orientation.

Therefore, as described above, by growing the crystal while generating the temperature gradient along the X direction in the powder precursor 111, the crystal having orientation along the X direction can be formed.

The organic luminescent material contains an oxazole derivative, and the triplet sensitizer contains a coumarin derivative. Use of the above-mentioned triplet sensitizer and organic luminescent material in combination in the production method of the present exemplary embodiment facilitates the production of the high-quality optical upconversion organic film with a high optical upconversion efficiency.

The organic film producing apparatus 10 of the present exemplary embodiment includes the precursor holder 11, the pair of clamping sections 12A and 12B, the press mechanism 14, and the first heating mechanism 13.

The precursor holder 11 has the holding space 114 with a predetermined height, and holds the powder precursor 111 containing the triplet sensitizer and the organic luminescent material in the holding space 114.

The pair of clamping sections 12A and 12B (the first clamping section 12A and the second clamping section 12B) clamp the precursor holder 11 in the height direction (Z direction).

The press mechanism 14 applies pressure so that the first clamping section 12A and the second clamping section 12B approach each other.

The first heating mechanism 13 generates the temperature gradient along the X direction by raising the first temperature, which is the temperature of the -X-side end of the powder precursor 111, and the second temperature, which is the temperature of the +X-side end thereof, to different temperatures through heating. Then, after heating the powder precursor 111 to or above the melting point T_{melt(PPO)} of the organic luminescent material, the first temperature and the second temperature are gradually lowered to below the coagulation point T_{solid(PPO)} while maintaining the temperature difference ΔT' between the first temperature and the second temperature.

The organic film producing apparatus 10 thus configured can produce the optical upconversion organic film in the production method as described above. Specifically, the first heating mechanism 13 can cool the melted powder precursor 111 to below the coagulation point T_{solid(PPO)} sequentially from the +X side, and the optical upconversion organic film having a crystal grown along the X direction is producible. This allows for the production of the high-quality optical upconversion organic film with a high optical upconversion efficiency.

In addition, since the use of an organic solvent is unnecessary, environmental impact in producing optical upconversion organic films can be reduced.

In the organic film producing apparatus 10 of the present exemplary embodiment, the first heating mechanism 13 includes the first heating section 131 provided at the -X-side ends of the pair of clamping sections 12A and 12B, the second heating section 132 provided at the +X-side ends thereof, and the cooling section 133 connected to the +X-side ends thereof.

By controlling the respective heating temperatures of the first heating section 131 and the second heating section 132 separately, the temperature gradient along the X direction can be generated in the pair of clamping sections 12A and 12B. If only the first heating section 131 and the second heating section 132 are provided, the amount of heat on the -X side at high temperature flows excessively to the +X side at low temperature, making it difficult to properly control the temperature difference ΔT. Since the cooling section 133 is provided in the present exemplary embodiment, the temperature difference ΔT (and the temperature difference ΔT') can be properly controlled.

The first heating section 131 includes the first rod heater 131A embedded in the -X-side end of the first clamping section 12A, and the first rod heater 131B embedded in the -X-side end of the second clamping section 12B. Similarly, the second heating section 132 includes the second rod heater 132A embedded in the +X-side end of the first clamping section 12A, and the second rod heater 132B embedded in the +X-side end of the second clamping section 12B.

With this arrangement, the same temperature gradient can be maintained in both the first clamping section 12A and the second clamping section 12B. In other words, it is possible to inhibit a temperature difference from being generated in the Z direction of the powder precursor 111, and to generate the temperature gradient along only the X direction.

In the present exemplary embodiment, the precursor holder 11 includes the pair of glass substrates 112A and 112B spaced apart in the Z direction via the spacer 113, and the holding space 114 formed by the gap between the pair of glass substrates 112A and 112B. The precursor holder 11 and the O-ring 122 that absorbs stress in the Z direction are provided between the pair of clamping sections 12A and 12B.

The gap between the pair of glass substrates 112A and 112B via the spacer 113 allows the powder precursor 111 to be housed in the holding space 114 having a uniform thickness in the Z direction, and an optical upconversion organic film having a uniform thickness can be produced.

In the present exemplary embodiment, the decompression mechanism 15 has the vacuum chamber 151 in which the precursor holder 11, the pair of clamping sections 12A and 12B, the press mechanism 14, and the first heating mechanism 13 are housed. The vacuum chamber 151 is decompressed by the vacuum pump 152.

This allows air to escape when the press mechanism 14 applies pressure to the powder precursor 111. Accordingly, it is possible to produce the optical upconversion organic film while inhibiting mixing of air bubbles.

In the present exemplary embodiment, the heat insulators 135 are further provided that sandwich the pair of clamping sections 12A and 12B in the Z direction.

The heat insulators 135 thus provided can inhibit the outflow of heat from the pair of clamping sections 12A and 12B, making it easier to maintain the temperature difference ΔT constant between the -X-side ends and the +X-side ends of the pair of clamping sections 12A and 12B. In particular, the heat insulators 135 are provided so as to cover portions of the clamping sections 12A and 12B overlapping the precursor holder 11 in the Z direction. This allows the temperature gradient along the X direction of the precursor holder 11 to be properly maintained.

### Second Exemplary Embodiment

Next, the second exemplary embodiment will be described.

In the above-described first exemplary embodiment, the precursor holder 11 is clamped between the pair of clamping sections 12A and 12B heated by the first heating mechanism 13 so as to generate the temperature gradient, and the heating temperature by the first heating mechanism 13 is lowered at a constant rate. In contrast, the second exemplary embodiment differs from the first exemplary embodiment in that the precursor holder 11 is moved relative to a heating region having a temperature gradient.

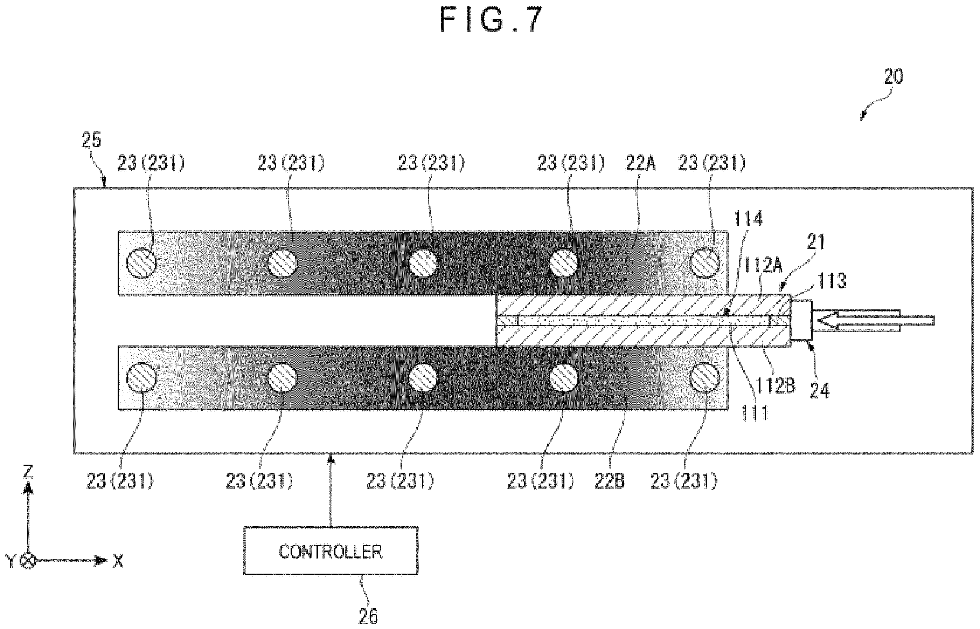

Fig. 7 illustrates a schematic configuration of an organic film producing apparatus 20 in the second exemplary embodiment.

The organic film producing apparatus 20 in the present exemplary embodiment includes a precursor holder 21, a pair of guide plates (a first guide plate 22A and a second guide plate 22B), a second heating mechanism 23, a moving mechanism 24, a decompression mechanism 25, and a controller 26.

The precursor holder 21 is the same as the precursor holder 11 of the first exemplary embodiment. The pair of glass substrates 112A and 112B and the spacer 113 define the holding space 114 for holding the powder precursor 111. In the first exemplary embodiment, the organic film producing apparatus 10 is of a batch process type for producing one chip of optical upconversion organic film. In the second exemplary embodiment, the organic film producing apparatus 20 is of a continuous process type capable of continuously producing optical upconversion organic films long in the X direction. Thus, the length in the X direction of the precursor holder 21 may be longer than that of the precursor holder 11 of the first exemplary embodiment.

The first guide plate 22A and the second guide plate 22B function as a pair of guide sections for guiding movement of the precursor holder 21 in the X direction. In the present exemplary embodiment, the first guide plate 22A and the second guide plate 22B are spaced apart at a constant distance in the Z direction, and their opposing surfaces are parallel to the XY plane.

The precursor holder 21 is sandwiched between the first guide plate 22A and the second guide plate 22B in the Z direction to be pressed in the Z direction. That is, in the present exemplary embodiment, the pair of the first guide plate 22A and the second guide plate 22B function as a press section.

The second heating mechanism 23 generates the temperature gradient along the X direction in the first guide plate 22A and the second guide plate 22B. For instance, the second heating mechanism 23 includes a plurality of rod heaters 231 embedded in the first guide plate 22A and the second guide plate 22B at regular intervals along the X direction, and driving of each rod heater 231 is controlled individually. By individually controlling the temperature of each rod heater 231, the temperature gradient is generated along the X direction in the pair of guide plates 22A and 22B.

More specifically, the second heating mechanism 23 generates the temperature gradient having in sequence a low temperature range, a high temperature range, and a low temperature range, along the X direction of the pair of guide plates 22A and 22B. The temperature of the low temperature range is below the coagulation point of the organic luminescent material. The temperature of the high temperature range is at or above the melting point of the organic luminescent material. The temperatures at mutually facing portions of the first guide plate 22A and the second guide plate 22B are controlled to be the same temperature.

Here, the temperature gradient of a part transitioning from the high temperature range to the low temperature range along a direction from the -X side toward the +X side is larger than that of a part transitioning from the low temperature range to the high temperature range along that direction. Further, in the high temperature range, a temperature at or above the melting point of the organic luminescent material is maintained for a certain distance along the X direction. With this arrangement, when the precursor holder 11 is moved at a constant speed from the +X side toward the -X side, the powder precursor 111 at any position is heated at a predetermined temperature-increase rate, maintained at a temperature at or above the melting point of the organic luminescent material for a certain period of time, and then cooled at a predetermined temperature-decrease rate. A lowering rate is set according to the temperature difference ΔT' between the -X-side end and the +X-side end of the powder precursor 111 moving from the high temperature range to the low temperature range along the X direction. For instance, when ΔT' = 10 degrees C is satisfied, the temperature-decrease rate is set to -3 degrees C/min.

In the above example, the precursor holder 21 is relatively moved toward the -X side at a constant speed so that the powder precursor 111 is sequentially heated at a preset temperature-increase rate (e.g., 5 degrees C/min) and is cooled at a preset temperature-decrease rate (e.g., -3 degrees C/min). Thus, the temperature of each portion of the powder precursor 111 is controlled so that the temperature gradient of the part transitioning from the high temperature range to the low temperature range along the direction from the -X side toward the +X side is larger than that of the part transitioning from the low temperature range to the high temperature range along that direction.

Alternatively, the temperature gradient of the part transitioning from the low temperature range to the high temperature range may be the same as that of the part transitioning from the high temperature range to the low temperature range along the direction from the -X side toward the +X side. In this case, a speed at which the precursor holder 21 is moved from the +X side may be appropriately controlled to perform heating at a preset temperature-increase rate and cooling at a preset temperature-decrease rate.

The moving mechanism 24 press-fits the precursor holder 21 holding the powder precursor 111 between the pair of guide plates 22A and 22B, and then moves the precursor holder 21 toward the -X side.

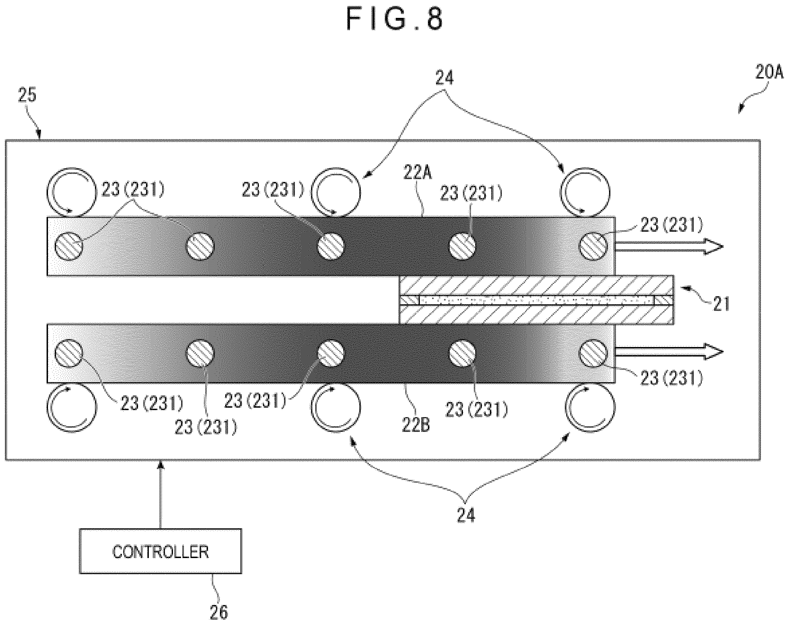

The pair of guide plates 22A and 22B are fixed and the moving mechanism 24 moves the precursor holder 21 toward the -X side as illustrated in Fig. 7 in the present exemplary embodiment. However, the invention is not limited thereto. Fig. 8 illustrates a schematic configuration of an organic film producing apparatus 20A according to a modified example of the second exemplary embodiment.

For instance, as illustrated in Fig. 8, the pair of guide plates 22A and 22B may be moved toward the +X side by a drive device such as a drive roller.

The decompression mechanism 25 includes, for instance, a vacuum chamber and a vacuum pump (illustration thereof omitted), as in the first exemplary embodiment. The decompression mechanism 25 maintains an environment where the precursor holder 21, the pair of guide plates 22A and 22B, the second heating mechanism 23, and the moving mechanism 24 are installed in a decompressed state.

The controller 26 controls the second heating mechanism 23, the moving mechanism 24, and the decompression mechanism 25. The controller 26 includes a heating drive circuit for individually controlling each rod heater 231, a movement control circuit for controlling the moving mechanism 24, a decompression control circuit for controlling the decompression mechanism 25, and the processor, though illustration thereof is omitted.

The processor outputs control signals to the drive circuits as needed. With this configuration, the second heating mechanism 23 is controlled to generate the temperature gradient in the pair of guide plates 22A and 22B and the precursor holder 11 is moved relative to the pair of guide plates 22A and 22B.

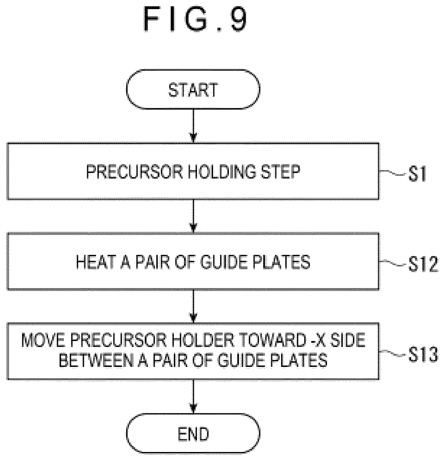

Fig. 9 is a flowchart of a production method of the optical upconversion organic film of the present exemplary embodiment.

In the present exemplary embodiment, Step S1 is performed, in which the powder precursor 111 is prepared and held in the precursor holder 21, as in the first exemplarily embodiment. Then, the precursor holder 21 is set to the moving mechanism 24.

Next, the processor controls the second heating mechanism 23 to heat the pair of guide plates 22A and 22B and generate the above-described temperature gradient (Step S12).

Subsequently, the processor controls the moving mechanism 24 to press-fit the precursor holder 21 between the pair of guide plates 22A and 22B and move the precursor holder 21 toward the -X side (Step S13).

Thus, the powder precursor 111 is pressed in the Z direction by the pair of guide plates 22A and 22B. The powder precursor 111 held in the precursor holder 21 is moved toward the -X side. The powder precursor 111 is moved from the low temperature range on the +X side to the high temperature range, to be heated at a predetermined temperature-increase rate. Then, the powder precursor 111 is melt when heated to or above the melting point T_{melt(PPO)} in the high temperature range. Thereafter, when the powder precursor 111 is moved from the high temperature range toward the low temperature range, the powder precursor 111 is cooled at a predetermined temperature-decrease rate, sequentially from the -X-side end thereof. Thus, the powder precursor 111 melted along the X direction, which is the direction of the temperature gradient, is sequentially crystallized, as in the first exemplary embodiment.

In this manner, the optical upconversion organic film having crystal orientation along the X direction is produced.

In the present exemplary embodiment, the moving mechanism 24 continuously moves the precursor holder 21 toward the -X side, allowing for the continuous production of optical upconversion organic films.

### Effects of Second Exemplary Embodiment

In the production method of the optical upconversion organic film of the present exemplary embodiment, in Step S1, the powder precursor 111 containing the triplet sensitizer and the organic luminescent material is held in the holding space 114 of the precursor holder 21. In Step S12, the guide plates 22A and 22B are heated so as to generate the temperature gradient along the X direction. Then, in Step S13, the precursor holder 21 is moved in the X direction relative to the pair of guide plates 22A and 22B serving as heating members.

In Step S13, the powder precursor 111 carried into the high temperature range is melted, and then the melted powder precursor 111 is further moved toward the -X side and is gradually cooled to below the coagulation point T_{solid(PPO)}, sequentially from the -X-side end thereof. Thus, the high-quality optical upconversion organic film with a high optical upconversion efficiency that has a crystal grown along the X direction is producible, as in the first exemplary embodiment.

In addition, since the use of an organic solvent is unnecessary also in the present exemplary embodiment, environmental impact in producing optical upconversion organic films can be reduced.

The organic film producing apparatus 20 of the present exemplary embodiment includes the precursor holder 21, the pair of guide plates 22A and 22B (guide sections), the second heating mechanism 23, and the moving mechanism 24.

The precursor holder 21 has the holding space 114 for holding the powder precursor 111 that contains the triplet sensitizer and the organic luminescent material, as in the first exemplary embodiment.

The pair of guide plates 22A and 22B sandwich the precursor holder 21 by pressing the precursor holder 21 in the Z direction, and guide the precursor holder 21 to be movable along the X direction.

The second heating mechanism 23 heats the pair of guide plates 22A and 22B to generate the temperature gradient along the X direction from the high temperature range at or above the melting point of the organic luminescent material to the low temperature range below the coagulation point of the organic luminescent material.

The moving mechanism 24 moves the precursor holder 21 in the X direction relative to the pair of guide plates 22A and 22B.

The organic film producing apparatus 20 thus configured can produce the optical upconversion organic film in the production method as described above. Specifically, the temperature gradient along the X direction is generated in the pair of guide plates 22A and 22B by the second heating mechanism 23, and the powder precursor 111 held in the precursor holder 21 is moved in the X direction by the moving mechanism 24. Thus, the powder precursor 111 can be melted in the high temperature range and cooled to below the coagulation point T_{solid(PPO)} sequentially from the -X side toward the +X side. This allows for the production of the optical upconversion organic film with a crystal grown along the X direction.

In addition, since the use of an organic solvent is unnecessary, environmental impact in producing optical upconversion organic films can be reduced.

### Third Exemplary Embodiment

Next, the third exemplary embodiment will be described.

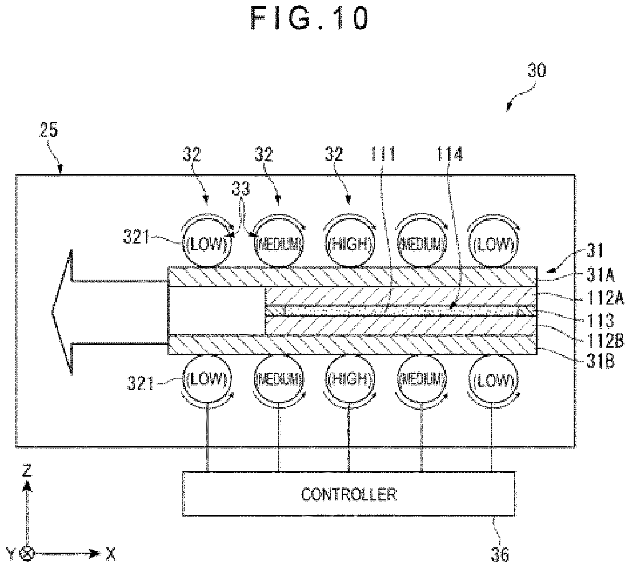

Fig. 10 illustrates a schematic configuration of an organic film producing apparatus 30 in the third exemplary embodiment.

In the second exemplary embodiment, the temperature gradient is generated in the pair of guide plates 22A and 22B constituting the guide sections, and the precursor holder 21 between the pair of guide plates 22A and 22B is moved relative to the pair of guide plates 22A and 22B toward the -X side.

Meanwhile, the organic film producing apparatus 30 in the third exemplary embodiment includes a precursor holder 31, a plurality of roller pairs 32, a roller heating mechanism 33, the decompression mechanism 25, and a controller 36.

The precursor holder 31 of the present exemplary embodiment includes the pair of glass substrates 112A and 112B, the spacer 113, and the powder precursor 111 held in the holding space 114 defined by the pair of glass substrates 112A and 112B, similarly to the precursor holder 21 of the second exemplary embodiment. In addition, the precursor holder 31 of the present exemplary embodiment includes a pair of support plates 31A and 31B for clamping the pair of glass substrates 112A and 112B in the Z direction. The support plates 31A and 31B are preferably made of a material having good thermal conductivity, for instance, metal or the like.

The roller pairs 32 each include a pair of rollers 321 aligned in the Z direction that sandwich the precursor holder 31 in the Z direction. The plurality of roller pairs 32 arranged along the X direction hold the precursor holder 31 within the XY plane. In the present exemplary embodiment, the rollers 321 on the +Z side of the plurality of roller pairs 32 constitute one of a pair of guide sections of the invention, and the rollers 321 on the -Z side of the plurality of roller pairs 32 constitute the other of the pair of guide sections of the invention. Each roller 321 has a rotation axis parallel to a Y direction orthogonal to the X direction and the Z direction and is driven to rotate around the axis by, for instance, a drive source such as a motor. The precursor holder 31 held in the XY plane is carried toward the -X side by the rotation drive of the rollers 321. That is, the roller pairs 32 also function as a moving mechanism of the invention.

The roller heating mechanism 33 heats each roller pair 32 independently. The roller heating mechanism 33 thus functions as a second heating mechanism of the invention. A pair of rollers 321 aligned in the Z direction constituting one roller pair 32 are at the same temperature. Examples of a configuration for heating each roller 321 include a heater provided at the rotation axis of the roller 321.

Here, in the present exemplary embodiment, the roller heating mechanism 33 heats the roller pair 32 disposed at the -X-side end to a temperature below the coagulation point T_{solid(PPO)} of the organic luminescent material. The roller heating mechanism 33 sequentially increase the temperature of a predetermined number of roller pairs 32 arranged on the +X side from the roller pair 32 at the -X-side end so that the roller pair 32 closer to the +X-side end has a higher temperature. The roller heating mechanism 33 raises the temperature of the M^{th} roller pair 32 (the third in an example of Fig. 10) at least to or above the melting point T_{melt(PPO)} of the organic luminescent material. The roller heating mechanism 33 sequentially lowers the temperature of a predetermined number of roller pairs 32 arranged on the +X side from the M^{th} roller pair 32 so that the roller pair 32 closer to the +X-side end has a lower temperature. The roller heating mechanism 33 lowers the temperature of the N^{th} roller pair 32 (the fifth in the example of Fig. 10) to below the coagulation point T_{solid(PPO)} of the organic luminescent material. For simplicity of the drawing, Fig. 10 illustrates an example in which five roller pairs 32 are provided and the third roller pair 32 has a high temperature. However, in practical use, a larger number of roller pairs 32 are arranged and the temperature of each roller pair 32 is controlled more precisely. Accordingly, the precursor holder 31 can be moved so that the powder precursor 111 is heated at a preset temperature-increase rate and cooled at a preset temperature-decrease rate, as in the second exemplary embodiment.

By the plurality of roller pairs 32 as described above carrying the precursor holder 31 toward the -X side, heat of each roller pair 32 is transferred to the support plates 31A and 31B of the precursor holder 31. This configuration causes the amount of heat transferred to the pair of support plates 31A and 31B to vary depending on positions, and generates a temperature gradient along the X direction in the precursor holder 31. In other words, a region of the pair of support plates 31A and 31B facing the M^{th} roller pair 32 corresponds to the high temperature range of the second exemplary embodiment, and regions facing the roller pair 32 at the -X-side end and the N^{th} roller pair 32 each correspond to the low temperature range of the second exemplary embodiment. Thus, as in the second exemplary embodiment, also in the present exemplary embodiment, the powder precursor 111 is moved toward the -X side, and thereby the temperature of the powder precursor 111 at any position in the X direction is controlled to change from the temperature below the coagulation point T_{solid(PPO)} to the temperature at or above the melting point T_{melt(PPO)} of the organic luminescent material at a predetermined temperature-increase rate so that the powder precursor 111 is melt, and then the powder precursor 111 is cooled to below the coagulation point T_{solid(PPO)} at a predetermined temperature-decrease rate. Accordingly, the powder precursor 111 is cooled at the above-described temperature-decrease rate while having the temperature gradient along the X direction, and the optical upconversion organic film with a crystal grown along the X direction is produced.

The decompression mechanism 25 includes, for instance, a vacuum chamber and a vacuum pump (illustration thereof omitted), as in the second exemplary embodiment. The decompression mechanism 25 maintains an environment where the precursor holder 31, the plurality of roller pairs 32, and the roller heating mechanism 33 are installed in a decompressed state.

The controller 36 controls the roller pairs 32, the roller heating mechanism 33, and the decompression mechanism 25. The controller 36 includes a heating drive circuit for individually controlling the roller heating mechanism 33 for each roller pair 32, a rotation control circuit for driving and rotating the pair of rollers 321 of the roller pairs 32, a decompression control circuit for controlling the decompression mechanism 25, and the processor, though illustration thereof is omitted.

The processor outputs control signals to the drive circuits as needed. In this configuration, the roller heating mechanism 33 is controlled to generate the temperature gradient in the precursor holder 31 carried by the roller pairs 32 and the precursor holder 11 is moved in the X direction.

In the example illustrated in Fig. 10, the precursor holder 31 is carried in the X direction by the plurality of roller pairs 32. However, the invention is not limited thereto, and any configuration may be employed in which the precursor holder 31 and the plurality of roller pairs 32 are relatively moved along the X direction. For instance, the plurality of roller pairs 32 may be moved toward the +X side relative to the precursor holder 31 while maintaining intervals therebetween, or the plurality of roller pairs 32 may be moved toward the X side and the precursor holder 31 may be moved toward the -X side.

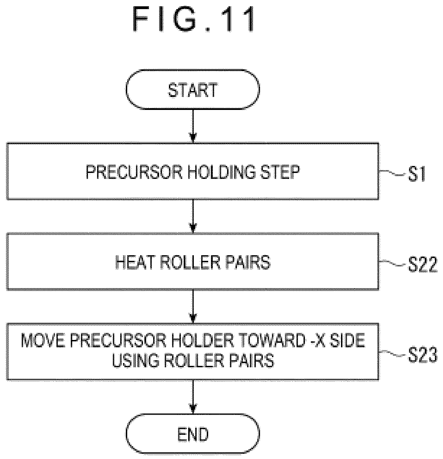

Fig. 11 is a flowchart of a production method of an optical upconversion organic film of the present exemplary embodiment.

In the present exemplary embodiment, the optical upconversion organic film is producible in a method substantially similar to that of the second exemplary embodiment.

First, Step S1 is performed, in which the powder precursor 111 is prepared and held in the precursor holder 31. In the present exemplary embodiment, the pair of glass substrates 112A and 112B are further clamped between the pair of support plates 31A and 31B.

Next, the processor controls the roller heating mechanism 33 to independently heat each of the roller pairs 32 arranged in the X direction. Specifically, as described above, the temperature of each roller pair 32 is independently controlled so that the temperature gradually increases toward the +X side from the roller pair 32 at the -X-side end to the M^{th} roller pair 32 and the temperature gradually decreases toward the +X side from the M^{th} roller pair 32 to the N^{th} roller pair 32 (Step 22).

Subsequently, the processor controls the rotation of each roller pair 32 to carry the precursor holder 31 toward the -X side from a position corresponding to the roller pair 32 at the +X-side end (Step S23).

The powder precursor 111 is thus pressed in the Z direction by the pair of rollers 321 aligned in the Z direction. The powder precursor 111 held in the precursor holder 31 is moved toward the -X side. Since the precursor holder 31 is carried from the N^{th} roller pair 32 at a low temperature to the M^{th} roller pair 32 at a high temperature, the powder precursor 111 is heated at a predetermined temperature-increase rate. Then, in the vicinity of the M^{th} roller pair 32, the powder precursor 111 is heated to or above the melting point T_{melt(PPO)} to melt. Thereafter, the powder precursor 111 is moved from a position corresponding to the M^{th} roller pair 32 toward the -X side, thereby being sequentially cooled at a predetermined temperature-decrease rate, from the -X-side end of the powder precursor 111. Thus, the powder precursor 111 melted along the X direction, which is the direction of the temperature gradient, is sequentially crystallized, as in each of the above-described exemplary embodiments.

In this manner, the optical upconversion organic film having crystal orientation along the X direction is produced.

In the present exemplary embodiment, as in the second exemplary embodiment, the precursor holder 31 is continuously moved toward the -X side by the plurality of roller pairs 32, which allows for the continuous production of optical upconversion organic films.

### Effects of Third Exemplary Embodiment

In the production method of the optical upconversion organic film of the present exemplary embodiment, in Step S1, the powder precursor 111 containing the triplet sensitizer and the organic luminescent material is held in the holding space 114 of the precursor holder 31. In Step S22, each of the plurality of roller pairs is heated so that the temperature gradient is generated along the X direction. Then, in Step S23, the precursor holder 31 is relatively moved in the X direction using the plurality of roller pairs 32 serving as heating members.

In Step S23, the powder precursor 111 carried to a position corresponding to the roller pair 32 (the M^{th} roller pair) heated to the high temperature is melted, and then the powder precursor 111 is gradually cooled to below the coagulation point T_{solid(PPO)} from the -X-side end thereof by being further carried toward the -X side. Thus, the high-quality optical upconversion organic film with a high optical upconversion efficiency that has a crystal grown along the X direction is producible, as in the above-described first and second exemplary embodiments.

In addition, since the use of an organic solvent is unnecessary also in the present exemplary embodiment, environmental impact in producing optical upconversion organic films can be reduced.

The organic film producing apparatus 30 of the present exemplary embodiment includes the precursor holder 31, the plurality of roller pairs 32 (guide sections), and the roller heating mechanism 33 (second heating mechanism).

As in the first and second exemplary embodiments, the precursor holder 31 includes the pair of glass substrates 112A and 112B and the spacer 113 that define the holding space 114 for holding the powder precursor 111 that contains the triplet sensitizer and the organic luminescent material. The precursor holder 31 further includes the pair of support plates 31A and 31B for clamping the pair of glass substrates 112A and 112B.

The plurality of roller pairs 32, which function as the guide sections of the present exemplary embodiment, have the rollers 321 that each rotate around the rotation axis parallel to the Y direction orthogonal to the Z direction and the X direction. The rollers 321 aligned in the Z direction are paired.

The roller heating mechanism 33 individually controls the temperature of each of the roller pairs 32 arranged in the X direction so that the roller pairs 32 are arranged in order along the X direction from the roller pair of the high temperate range (the M^{th} roller pair 32) to the roller pair of the low temperature range (the roller pair 32 at the -X-side end).

The organic film producing apparatus 30 thus configured can produce the optical upconversion organic film in the production method as described above. Specifically, the roller heating mechanism 33 controls the temperatures of the plurality of roller pairs 32 arranged in the X direction to generate the temperature gradient along the X direction. The precursor holder 31 holding the powder precursor 111 is moved in the X direction by the rotation drive of the respective rollers 321 of the roller pairs 32. Thus, the powder precursor 111 can be melted at a high temperature and cooled to below the coagulation point T_{solid(PPO)} sequentially from the -X side toward the +X side. This allows for the production of the optical upconversion organic film with a crystal grown along the X direction.

In addition, since the use of an organic solvent is unnecessary, environmental impact in producing optical upconversion organic films can be reduced.

### Fourth Exemplary Embodiment

The fourth exemplary embodiment relates to an optical upconversion organic film. The optical upconversion is occasionally referred to as a photon upconversion.

The optical upconversion organic film of the present exemplary embodiment contains a triplet sensitizer and an organic luminescent material. The organic luminescent material has ultraviolet luminescence. The optical upconversion organic film of the present exemplary embodiment is a film having crystallinity.

In the optical upconversion organic film of the present exemplary embodiment, the triplet sensitizer absorbs excitation light and is excited, and triplet excitons are generated through intersystem crossing from the lowest singlet state to the lowest triplet state. Triplet excitons of the organic luminescent material generated by the triplet-triplet energy transfer from the triplet sensitizer diffuse within the crystals of organic luminescent material molecules (triplet exciton diffusion) and collide with each other, resulting in triplet-triplet annihilation (TTA). As a result of TTA, singlet excitons of organic luminescent material molecules are generated. The organic luminescent material in the optical upconversion organic film of the present exemplary embodiment can emit light with a shorter wavelength than the light absorbed by the triplet sensitizer (upconversion).

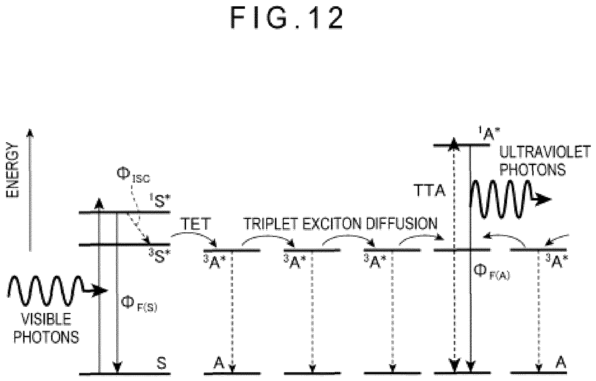

Fig. 12 illustrates an upconversion mechanism in the optical upconversion organic film of the present exemplary embodiment. As illustrated in Fig. 12, the lowest triplet state of the triplet sensitizer is generated by intersystem crossing from the lowest singlet state excited by absorbing excitation light (e.g., visible photon), triplet-triplet energy transfer (TET) to the organic luminescent material occurs to generate the lowest triplet state of the organic luminescent material. When two organic luminescent material molecules in the triplet state collide with each other, the lowest singlet state of the organic luminescent material is generated by TTA. Emission (e.g., ultraviolet photons (UV photons)) occurs from the lowest singlet state of the organic luminescent material, which is at a higher energy level than the lowest singlet state of the triplet sensitizer. In Fig. 12, S represents the ground state of the sensitizer, ¹S* represents the lowest singlet state of the sensitizer, ³S* represents the lowest triplet state of the sensitizer, A represents the ground state of the luminescent material, ¹A* represents the lowest singlet state of the luminescent material, ³A* represents the lowest triplet state of the luminescent material, Φ_{ISC} represents an intersystem crossing quantum efficiency from the lowest singlet state to the lowest triplet state of the sensitizer, Φ_{F(S)} represents the luminescence quantum efficiency from the lowest singlet state of the sensitizer, and Φ_{F(A)} represents the luminescence quantum efficiency from the lowest singlet state of the luminescent material.

In the optical upconversion organic film of the present exemplary embodiment, the triplet sensitizer is a material that absorbs excitation light and generates excited triplet excitons.

In the optical upconversion organic film of the present exemplary embodiment, the organic luminescent material is preferably a material that emits light having a maximum peak in a shorter wavelength region relative to a local maximum peak wavelength closest to a long-wavelength region in an absorption spectrum of the triplet sensitizer, where the shorter wavelength region is a wavelength region of 400 nm or less (preferably in a range from 315 nm to 400 nm).

Herein, the local maximum peak wavelength of the triplet sensitizer refers to a local maximum peak wavelength in an absorption spectrum of the triplet sensitizer alone, and the maximum peak wavelength of the organic luminescent material refers to a maximum peak wavelength in an emission spectrum of the organic luminescent material alone.

The optical upconversion organic film according to the present exemplary embodiment is capable of upconversion from visible light into ultraviolet light. Herein, ultraviolet light is light in a wavelength region ranging from 315 nm to 400 nm.

In the optical upconversion organic film according to the present exemplary embodiment, the triplet sensitizer is preferably contained in a dispersed state in a crystalline film of the organic luminescent material. The dispersion of the triplet sensitizer in the crystalline film of the organic luminescent material facilitates triplet-triplet energy transfer from the triplet sensitizer to the organic luminescent material.

In the optical upconversion organic film of the present exemplary embodiment, the molar ratio of the triplet sensitizer to the organic luminescent material is preferably in a range from 1:1,000 to 1:100,000, more preferably in a range from 1:5,000 to 1:80,000, and still more preferably in a range from 1:10,000 to 1:50,000.

The ratio M_{A}/M_{S} of the number of moles M_{A} of the organic luminescent material to the number of moles M_{S} of the triplet sensitizer in the optical upconversion organic film of the present exemplary embodiment is preferably in a range from 1,000 to 100,000. The molar ratio M_{A}/M_{S} is more preferably 5,000 or more, still more preferably 10,000 or more. The molar ratio M_{A}/M_{S} is more preferably 80,000 or less, still more preferably 50,000 or less.

The ratio M_{A}/M_{S} of 1,000 or more facilitates improvement in the upconversion quantum efficiency and is capable of reducing the excitation threshold intensity.

The ratio M_{A}/M_{S} of 100,000 or less is capable of preventing a decrease in the upconversion quantum efficiency caused by the following (i) and (ii).
(i) Excessive triplet sensitizer reduces a lifetime of the lowest triplet state.
(ii) Optical upconversion emission is reabsorbed by the triplet sensitizer itself.

Herein, a numerical range expressed using, for instance, "AA to BB" means a range including the numerical value AA given before " to " of "AA to BB" as the lower limit value and the numerical value BB given after " to " of "AA to BB" as the upper limit value.

The optical upconversion organic film of the present exemplary embodiment preferably contains no polymer compound. The polymer compound is, for instance, a compound having a molecular weight of 10,000 or more. Examples of the polymer compound include a polymer. The triplet sensitizer and the organic luminescent material are preferably not polymer compounds.

The sum of the content of the triplet sensitizer and the content of the organic luminescent material in the optical upconversion organic film of the present exemplary embodiment is preferably 90 mass% or more, more preferably 95 mass% or more, and still more preferably 99 mass% or more.

Preferably, the optical upconversion organic film of the present exemplary embodiment substantially consists of only two components that are the triplet sensitizer and the organic luminescent material.

In the optical upconversion organic film according to the present exemplary embodiment, the content of an organic solvent is preferably 1 mass% or less, more preferably 0.1 mass% or less, and still more preferably 0.01 mass% or less. The optical upconversion organic film according to the present exemplary embodiment preferably contains no organic solvent. Organic solvents are volatile, flammable, and biologically toxic. Therefore, as the content of the organic solvent in the film becomes lower, the optical upconversion organic film becomes safer and more stable and more easily applied to environmentally friendly applications.

In the optical upconversion organic film of the present exemplary embodiment, the excitation threshold intensity is preferably 50 mW/cm² or less, more preferably 45 mW/cm² or less, still more preferably 30 mW/cm² or less, and still further more preferably 25 mW/cm² or less.

### Organic Luminescent Material

In the optical upconversion organic film of the present exemplary embodiment, the fluorescence quantum yield of the organic luminescent material is preferably 40% or more, more preferably 50% or more. The fluorescence quantum yield of the organic luminescent material being 40% or more makes it easy to increase the upconversion quantum efficiency.

In the optical upconversion organic film of the present exemplary embodiment, the crystal of the organic luminescent material preferably has uniaxial orientation. As described later in Examples, it can be confirmed by observation with a polarization microscope that the crystal has uniaxial orientation. The crystal of the organic luminescent material having uniaxial orientation facilitates the triplet-triplet energy transfer from the triplet sensitizer to the organic luminescent material and triplet-triplet energy transfer between the organic luminescent materials.

In the optical upconversion organic film of the present exemplary embodiment, the melting point of the organic luminescent material is preferably 120 degrees C or less, more preferably 100 degrees C or less, and still more preferably 80 degrees C or less. The melting point of the organic luminescent material being 120 degrees C or less makes it easy to form the optical upconversion organic film in the production method according to the above-described exemplary embodiments.

In the optical upconversion organic film of the present exemplary embodiment, the organic luminescent material preferably contains no metal atom in a molecule. Use of the organic luminescent material containing no metal atom can avoid generation of environmental pollution due to metal in the production and disposal of the optical upconversion organic film.

In the optical upconversion organic film of the present exemplary embodiment, the organic luminescent material preferably contains in a molecule only a hydrogen atom, a carbon atom, an oxygen atom, and a nitrogen atom.

In the optical upconversion organic film of the present exemplary embodiment, also preferably, the organic luminescent material contains in a molecule no fused ring skeleton containing three or more benzene rings.

In the optical upconversion organic film of the present exemplary embodiment, the organic luminescent material preferably contains at least one compound selected from the group consisting of, for instance, an oxazole derivative, thiazole derivative, furan derivative, fluorene derivative, dibenzofuran derivative, and dibenzothiophene derivative.

In the optical upconversion organic film of the present exemplary embodiment, the organic luminescent material preferably contains an oxazole derivative.

In the optical upconversion organic film of the present exemplary embodiment, the organic luminescent material preferably contains a compound represented by a formula (1) below.

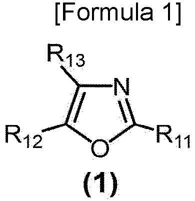

In the formula (1), R₁₁, R₁₂, and R₁₃ are each independently a hydrogen atom or a substituent.

In the formula (1), R₁₁, R₁₂, and R₁₃ as substituents are preferably each independently a substituted or unsubstituted alkyl group having 1 to 50 carbon atoms, a substituted or unsubstituted aryl group having 6 to 50 ring carbon atoms, or a substituted unsubstituted heterocyclic group having 5 to 50 ring atoms.

In the formula (1), R₁₁ and R₁₂ are each independently preferably a substituted or unsubstituted aryl group having 6 to 50 ring carbon atoms, more preferably a substituted or unsubstituted aryl group having 6 to 18 ring carbon atoms, and still more preferably a substituted or unsubstituted aryl group having 6 to14 ring carbon atoms.

In the formula (1), R₁₃ is preferably a hydrogen atom.

In the formula (1), R₁₁ and R₁₂ are preferably mutually the same group.

Examples of the substituted or unsubstituted aryl group having 6 to 50 ring carbon atoms include a phenyl group, 1-naphthyl group, 2-naphthyl group, 1-anthryl group, 2-anthryl group, 9-anthryl group, 1-phenanthryl group, 2-phenanthryl group, 3-phenanthryl group, 4-phenanthryl group, 9-phenanthryl group, 1-naphthacenyl group, 2-naphthacenyl group, 9-naphthacenyl group, 1-pyrenyl group, 2-pyrenyl group, 4-pyrenyl group, 2-biphenylyl group, 3-biphenylyl group, 4-biphenylyl group, p-terphenyl-4-yl group, p-terphenyl-3-yl group, p-terphenyl-2-yl group, m-terphenyl-4-yl group, m-terphenyl-3-yl group, m-terphenyl-2-yl group, o-tolyl group, m-tolyl group, p-tolyl group, p-t-butylphenyl group, p-(2-phenylpropyl)phenyl group, 3-methyl-2-naphthyl group, 4-methyl-1-naphthyl group, 4-methyl-1-anthryl group, 4'-methylbiphenylyl group, and 4"-t-butyl-p-terphenyl-4-yl group.

Examples of the substituted or unsubstituted heterocyclic group having 5 to 50 ring atoms include a 1-pyrrolyl group, 2-pyrrolyl group, 3-pyrrolyl group, pyrazinyl group, 2-pyridinyl group, 3-pyridinyl group, 4-pyridinyl group, 1-indolyl group, 2-indolyl group, 3-indolyl group, 4-indolyl group, 5-indolyl group, 6-indolyl group, 7-indolyl group, 1-isoindolyl group, 2-isoindolyl group, 3-isoindolyl group, 4-isoindolyl group, 5-isoindolyl group, 6-isoindolyl group, 7-isoindolyl group, 2-furyl group, 3-furyl group, 2-benzofuranyl group, 3-benzofuranyl group, 4-benzofuranyl group, 5-benzofuranyl group, 6-benzofuranyl group, 7-benzofuranyl group, 1-isobenzofuranyl group, 3-isobenzofuranyl group, 4-isobenzofuranyl group, 5-isobenzofuranyl group, 6-isobenzofuranyl group, 7-isobenzofuranyl group, quinolyl group, 3-quinolyl group, 4-quinolyl group, 5-quinolyl group, 6-quinolyl group, 7-quinolyl group, 8-quinolyl group, 1-isoquinolyl group, 3-isoquinolyl group, 4-isoquinolyl group, 5-isoquinolyl group, 6-isoquinolyl group, 7-isoquinolyl group, 8-isoquinolyl group, 2-quinoxalinyl group, 5-quinoxalinyl group, 6-quinoxalinyl group, 1-carbazolyl group, 2-carbazolyl group, 3-carbazolyl group, 4-carbazolyl group, 9-carbazolyl group, 1-phenanthridinyl group, 2-phenanthridinyl group, 3-phenanthridinyl group, 4-phenanthridinyl group, 6-phenanthridinyl group, 7-phenanthridinyl group, 8-phenanthridinyl group, 9-phenanthridinyl group, 10-phenanthridinyl group, 1-acridinyl group, 2-acridinyl group, 3-acridinyl group, 4-acridinyl group, 9-acridinyl group, 1,7-phenanthrolin-2-yl group, 1,7-phenanthrolin-3-yl group, 1,7-phenanthrolin-4-yl group, 1,7-phenanthrolin-5-yl group, 1,7-phenanthrolin-6-yl group, 1,7-phenanthrolin-8-yl group, 1,7-phenanthrolin-9-yl group, 1,7-phenanthrolin-10-yl group, 1,8-phenanthrolin-2-yl group, 1,8-phenanthrolin-3-yl group, 1,8-phenanthrolin-4-yl group, 1,8-phenanthrolin-5-yl group, 1,8-phenanthrolin-6-yl group, 1,8-phenanthrolin-7-yl group, 1,8-phenanthrolin-9-yl group, 1,8-phenanthrolin-10-yl group, 1,9-phenanthrolin-2-yl group, 1,9-phenanthrolin-3-yl group, 1,9-phenanthrolin-4-yl group, 1,9-phenanthrolin-5-yl group, 1,9-phenanthrolin-6-yl group, 1,9-phenanthrolin-7-yl group, 1,9-phenanthrolin-8-yl group, 1,9-phenanthrolin-10-yl group, 1,10-phenanthrolin-2-yl group, 1,10-phenanthrolin-3-yl group, 1,10-phenanthrolin-4-yl group, 1,10-phenanthrolin-5-yl group, 2,9-phenanthrolin-1-yl group, 2,9-phenanthrolin-3-yl group, 2,9-phenanthrolin-4-yl group, 2,9-phenanthrolin-5-yl group, 2,9-phenanthrolin-6-yl group, 2,9-phenanthrolin-7-yl group, 2,9-phenanthrolin-8-yl group, 2,9-phenanthrolin-10-yl group, 2,8-phenanthrolin-1-yl group, 2,8-phenanthrolin-3-yl group, 2,8-phenanthrolin-4-yl group, 2,8-phenanthrolin-5-yl group, 2,8-phenanthrolin-6-yl group, 2,8-phenanthrolin-7-yl group, 2,8-phenanthrolin-9-yl group, 2,8-phenanthrolin-10-yl group, 2,7-phenanthrolin-1-yl group, 2,7-phenanthrolin-3-yl group, 2,7-phenanthrolin-4-yl group, 2,7-phenanthrolin-5-yl group, 2,7-phenanthrolin-6-yl group, 2,7-phenanthrolin-8-yl group, 2,7-phenanthrolin-9-yl group, 2,7-phenanthrolin-10-yl group, 1-phenazinyl group, 2-phenazinyl group, 1-phenothiazinyl group, 2-phenothiazinyl group, 3-phenothiazinyl group, 4-phenothiazinyl group, 10-phenothiazinyl group, 1-phenoxazinyl group, 2-phenoxazinyl group, 3-phenoxazinyl group, 4-phenoxazinyl group, 10-phenoxazinyl group, 2-oxazolyl group, 4-oxazolyl group, 5-oxazolyl group, 2-oxadiazolyl group, 5-oxadiazolyl group, 3-furazanyl group, 2-thienyl group, 3-thienyl group, 2-methylpyrrol-1-yl group, 2-methylpyrrol-3-yl group, 2-methylpyrrol-4-yl group, 2-methylpyrrol-5-yl group, 3-methylpyrrol-1-yl group, 3-methylpyrrol-2-yl group, 3-methylpyrrol-4-yl group, 3-methylpyrrol-5-yl group, 2-t-butylpyrrol-4-yl group, 3-(2-phenylpropyl)pyrrol-1-yl group, 2-methyl-1-indolyl group, 4-methyl-1-indolyl group, 2-methyl-3-indolyl group, 4-methyl-3-indolyl group, 2-t-butyl 1-indolyl group, 4-t-butyl 1-indolyl group, 2-t-butyl 3-indolyl group, and 4-t-butyl 3-indolyl group.

Examples of the substituted or unsubstituted alkyl group having 1 to 50 carbon atoms include a methyl group, ethyl group, propyl group, isopropyl group, n-butyl group, s-butyl group, isobutyl group, t-butyl group, n-pentyl group, n-hexyl group, n-heptyl group, n-octyl group, hydroxymethyl group, 1-hydroxyethyl group, 2-hydroxyethyl group, 2-hydroxyisobutyl group, 1,2-dihydroxyethyl group, 1,3-dihydroxyisopropyl group, 2,3-dihydroxy-t-butyl group, 1,2,3-trihydroxypropyl group, chloromethyl group, 1-chloroethyl group, 2-chloroethyl group, 2-chloroisobutyl group, 1,2-dichloroethyl group, 1,3-dichloroisopropyl group, 2,3-dichloro-t-butyl group, 1,2,3-trichloropropyl group, bromomethyl group, 1-bromoethyl group, 2-bromoethyl group, 2-bromoisobutyl group, 1,2-dibromoethyl group, 1,3-dibromoisopropyl group, 2,3-dibromo-t-butyl group, 1,2,3-tribromopropyl group, iodomethyl group, 1-iodoethyl group, 2-iodoethyl group, 2-iodoisobutyl group, 1,2-diiodoethyl group, 1,3-diiodoisopropyl group, 2,3-diiodo-t-butyl group, 1,2,3-triiodopropyl group, aminomethyl group, 1-aminoethyl group, 2-aminoethyl group, 2-aminoisobutyl group, 1,2-diaminoethyl group, 1,3-diaminoisopropyl group, 2,3-diamino-t-butyl group, 1,2,3-triaminopropyl group, cyanomethyl group, 1-cyanoethyl group, 2-cyanoethyl group, 2-cyanoisobutyl group, 1,2-dicyanoethyl group, 1,3-dicyanoisopropyl group, 2,3-dicyano-t-butyl group, 1,2,3-tricyanopropyl group, nitromethyl group, 1-nitroethyl group, 2-nitroethyl group, 2-nitroisobutyl group, 1,2-dinitroethyl group, 1,3-dinitroisopropyl group, 2,3-dinitro-t-butyl group, and 1,2,3-trinitropropyl group.

In the optical upconversion organic film of the present exemplary embodiment, for instance, compounds represented by formulae (11) to (13) below can be used as the organic luminescent material. The compounds represented by the formulae (11) to (13) below are relatively easy to obtain.

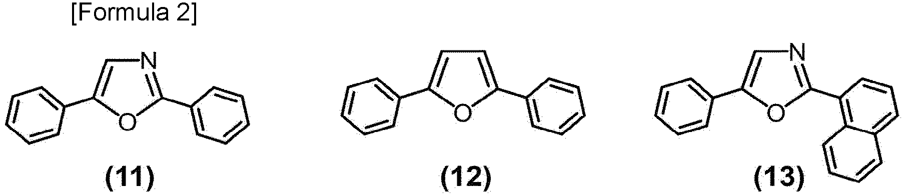

The compound represented by the formula (11) has a melting point of 69 degrees C and a fluorescence quantum yield Φ_{F(A)} of 79%. The compound represented by the formula (11) is occasionally abbreviated as PPO.

The compound represented by the formula (12) has a melting point of 88 degrees C and a fluorescence quantum yield Φ_{F(A)} of 46%. The compound represented by the formula (12) is occasionally abbreviated as PPF.

The compound represented by the formula (13) has a melting point of 105 degrees C and a fluorescence quantum yield Φ_{F(A)} of 37%. The compound represented by the formula (13) is occasionally abbreviated as α-NPO.

In the optical upconversion organic film of the present exemplary embodiment, the organic luminescent material is preferably the compound (2,5-diphenyloxazole) represented by the formula (11).

### Triplet Sensitizer

In the optical upconversion organic film of the present exemplary embodiment, the triplet sensitizer is preferably a compound having a local maximum absorption wavelength within the wavelength range of sunlight. As the triplet sensitizer, a compound having a local maximum absorption wavelength in a range from 200 nm to 1,000 nm is usually used. The triplet sensitizer preferably has a local maximum absorption wavelength in a range from 400 nm to 700 nm. When the local maximum absorption wavelength of the triplet sensitizer is within this range, light with a relatively long wavelength that is not utilized in typical light-secondary energy conversion elements (elements for converting light into secondary energy), such as a solar cell and a hydrogen generation photocatalyst, can be converted into light with a relatively short wavelength (e.g. less than 400 nm) that is utilized in such typical light-secondary energy conversion elements. Accordingly, the optical upconversion organic film of the present exemplary embodiment enables light in a wide wavelength range included in sunlight to be effectively utilized in light-secondary energy conversion elements. In the optical upconversion organic film of the present exemplary embodiment, in order to effectively utilize light with wavelengths in the blue, violet, and ultraviolet regions, the triplet sensitizer may be a compound having a local maximum absorption wavelength in a range from 250 nm to 499 nm.

As for the triplet sensitizer, even molecular species that have not hitherto been called dyes can also be used as long as they are compounds having light absorption in a range from the ultraviolet region to the infrared region. Examples of the triplet sensitizer include acenaphthene derivatives, acetophenone derivatives, anthracene derivatives, diphenylacetylene derivatives, acridan derivatives, acridine derivatives, acridone derivatives, thioacridone derivatives, angelicin derivatives, anthracene derivatives, anthraquinone derivatives, azafluorene derivatives, azulene derivatives, benzyl derivatives, carbazole derivatives, coronene derivatives, sumanene derivatives, biphenylene derivatives, fluorene derivatives, perylene derivatives, phenanthrene derivatives, phenanthroline derivatives, phenazine derivatives, benzophenone derivatives, pyrene derivatives, benzoquinone derivatives, biacetyl derivatives, bianthranyl derivatives, fullerene derivatives, graphene derivatives, carotene derivatives, chlorophyll derivatives, chrysene derivatives, cinnoline derivatives, coumarin derivatives, curcumin derivatives, dansylamide derivatives, flavone derivatives, fluorenone derivatives, fluorescein derivatives, helicene derivatives, indene derivatives, lumichrome derivatives, lumiflavin derivatives, oxadiazole derivatives, periflanthene derivatives, phenol derivatives, phenothiazine derivatives, phenoxazine derivatives, phthalazine derivatives, phthalocyanine derivatives, picene derivatives, porphyrin derivatives, porphycene derivatives, hemiporphycene derivatives, subphthalocyanine derivatives, psoralen derivatives, angelicin derivatives, purine derivatives, pyrene derivatives, pyromethene derivatives, pyridyl ketone derivatives, phenyl ketone derivatives, pyridyl ketone derivatives, thienyl ketone derivatives, furanyl ketone derivatives, quinazoline derivatives, quinoline derivatives, quinoxaline derivatives, retinal derivatives, retinol derivatives, rhodamine derivatives, riboflavin derivatives, rubrene derivatives, squaline derivatives, stilbene derivatives, tetracene derivatives, pentacene derivatives, anthraquinone derivatives, tetracenequinone derivatives, pentacenequinone derivatives, thiophosgene derivatives, indigo derivatives, thioindigo derivatives, thioxanthene derivatives, thymine derivatives, triphenylene derivatives, triphenylmethane derivatives, triaryl derivatives, tryptophan derivatives, uracil derivatives, xanthene derivatives, ferrocene derivatives, azulene derivatives, biacetyl derivatives, terphenyl derivatives, terfuran derivatives, terthiophene derivatives, oligoaryl derivatives, fullerene derivatives, conjugated polyene derivatives, group 14 element-containing fused polycyclic aromatic compound derivatives, and fused polycyclic hetero aromatic compound derivatives. The triplet sensitizers are not limited to those described above.

Specific examples of the triplet sensitizer include metalloporphyrins (metal complexes of porphyrins); metallotetraazaporphyrins (metal complexes of tetraazaporphyrins); metallophthalocyanines (metal complexes of phthalocyanines); an iodine derivative of 3,5-dimethyl-boron dipyrromethene; boron dipyrromethenes such as an iodine derivative of 3,5-dimethyl-8-phenylboron dipyrromethene; Schiff base metal complexes such as salen-metal complexes; metal-bipyridine complexes such as rubidium-bipyridine complexes and iridium-phenanthroline complexes; metal-phenanthroline complexes; naphthalenediimides such as N-alkylnaphthalenediimide; acridones such as N-methylacridone and N-butyl-2-chloroacridone; thioxanthones such as 2,4-diethylthioxanthone, xanthones, and xanthenes; acridines such as acridine yellow; coumarins such as coumarin 6 and coumarin 314; biacetyls such as 2,3-butanedione; anthracenes such as 9,10-dibromoanthracene and 9,9'-bianthryl; oligoaryls such as bifuran, bithiophene, and bis(benzoxazolyl)thiophene; and fused polycyclic hetero aromatic compounds such as chrysene, phenanthrene or derivatives thereof. The triplet sensitizers are not limited to those described above.

In the optical upconversion organic film of the present exemplary embodiment, the triplet sensitizer preferably contains no metal atom in a molecule. Use of the triplet sensitizer containing no metal atom can avoid the generation of environmental pollution due to metal in the production and disposal of the optical upconversion organic film.

In the optical upconversion organic film of the present exemplary embodiment, the triplet sensitizer preferably contains in a molecule only a hydrogen atom, a carbon atom, an oxygen atom, and a nitrogen atom.

In the optical upconversion organic film of the present exemplary embodiment, the triplet sensitizer preferably contains a coumarin derivative.

In the optical upconversion organic film of the present exemplary embodiment, it is preferable that the triplet sensitizer is a coumarin derivative and the organic luminescent material is an oxazole derivative. A combination of the above-mentioned triplet sensitizer and organic luminescent material increases the overlap integral between an emission spectrum of the triplet sensitizer and an absorption spectrum of the organic luminescent material, facilitating the triplet-triplet energy transfer from the triplet sensitizer to the organic luminescent material.

In the optical upconversion organic film of the present exemplary embodiment, the triplet sensitizer preferably contains in a molecule a compound having at least one skeleton represented by a formula (CMR3) below.

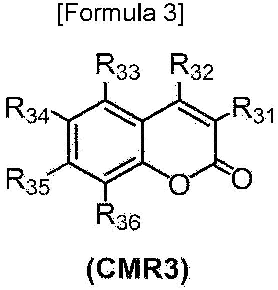

In the formula (CMR3), R₃₁ to R₃₆ are each independently a hydrogen atom or a substituent. At least one combination of adjacent two or more of R₃₁ to R₃₆ are mutually bonded to form a substituted or unsubstituted monocyclic ring, mutually bonded to form a substituted or unsubstituted fused ring, or not mutually bonded. In the formula (CMR3), preferably at least one of R₃₁ to R₃₆ is a substituent, and more preferably at least one of R₃₁, R₃₂, or R₃₅ is a substituent. For instance, when R₃₅ is an electron-donating group, strong light absorption and emission are easily exhibited. When at least one of R₃₁ or R₃₂ is a substituent, an absorption wavelength and an emission wavelength are easily changed significantly. When at least one of R₃₁ or R₃₂ is an electron-withdrawing group, emission luminance is easily increased. In the formula (CMR3), R₃₁ to R₃₆ as substituents are preferably each independently a substituted or unsubstituted alkyl group having 1 to 50 carbon atoms, a substituted or unsubstituted aryl group having 6 to 50 ring carbon atoms, a substituted or unsubstituted heterocyclic group having 5 to 50 ring atoms, a group represented by -N(R₃₇)(R₃₈), a group represented by -C(=O)-OR₃₉, a group represented by -S(=O)₂-R₄₀, or a cyano group. R₃₇ to R₄₀ are each independently a hydrogen atom or a substituent. R₃₇ to R₄₀ as substituents are preferably each independently a substituted or unsubstituted alkyl group having 1 to 50 carbon atoms, a substituted or unsubstituted aryl group having 6 to 50 ring carbon atoms, or a substituted or unsubstituted heterocyclic group having 5 to 50 ring atoms. In the formula (CMR3), a substituted or unsubstituted heterocyclic group having 5 to 50 ring atoms as each of R₃₁ to R₄₀ is also preferably, for instance, a substituted or unsubstituted benzimidazol group, or a substituted or unsubstituted benzothiazole group.

In the optical upconversion organic film of the present exemplary embodiment, the triplet sensitizer preferably contains in a molecule a compound having at least two skeletons represented by the formula (CMR3). When the triplet sensitizer has in the molecule at least two skeletons represented by the formula (CMR3), at least one of R₃₁ to R₃₆ is a single bond bonded to another skeleton represented by the formula (CMR3), or a linking group connecting to another skeleton represented by the formula (CMR3).

In the optical upconversion organic film of the present exemplary embodiment, the triplet sensitizer preferably contains a compound represented by a formula (CMR31) below.

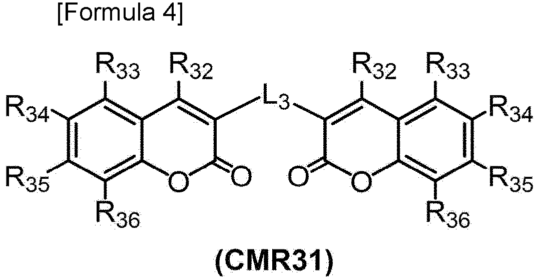

**In** the formula (CMR31), L₃ is a linking group, R₃₂ to R₃₆ each independently represent the same as R₃₂ to R₃₆ in the formula (CMR3), a plurality of R₃₂ are mutually the same or different, a plurality of R₃₃ are mutually the same or different, a plurality of R₃₄ are mutually the same or different, a plurality of R₃₅ are mutually the same or different, and a plurality of R₃₆ are mutually the same or different. L₃ as the linking group is preferably a group represented by -C(=O)-, a substituted or unsubstituted arylene group having 6 to 50 ring carbon atoms, or a substituted or unsubstituted divalent heterocyclic group having 5 to 50 ring atoms, more preferably a group represented by -C(=O)-. In addition, L₃ as the linking group is also preferably a substituted or unsubstituted phenylene group, a substituted or unsubstituted pyridylene group, or a substituted unsubstituted thienylene group.

In the optical upconversion organic film of the present exemplary embodiment, the compound represented by the formula (CMR31) is preferably a compound represented by a formula (CMR32) below.

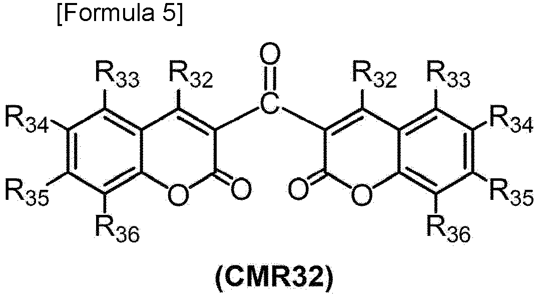

In the formula (CMR32), R₃₂ to R₃₆ each independently represent the same as R₃₂ to R₃₆ in the formula (CMR31).

In the optical upconversion organic film of the present exemplary embodiment, a coumarin derivative serving as the triplet sensitizer preferably has at least one group represented by -N(R₃₇)(R₃₈).

In the optical upconversion organic film of the present exemplary embodiment, the compound represented by the formula (CMR31) and the compound represented by the formula (CMR32) each preferably have two groups represented by -N(R₃₇)(R₃₈), and two coumarin skeletons each preferably have one group represented by -N(R₃₇)(R₃₈).

In the optical upconversion organic film of the present exemplary embodiment, R₃₅ is preferably a group represented by -N(R₃₇)(R₃₈). R₃₇ and R₃₈ are each independently preferably a substituted or unsubstituted alkyl group having 1 to 50 carbon atoms, more preferably a substituted or unsubstituted alkyl group having 1 to 18 carbon atoms, and still more preferably an alkyl group having 1 to 6 carbon atoms.

In the optical upconversion organic film of the present exemplary embodiment, for instance, the following compounds can be used as the triplet sensitizer.

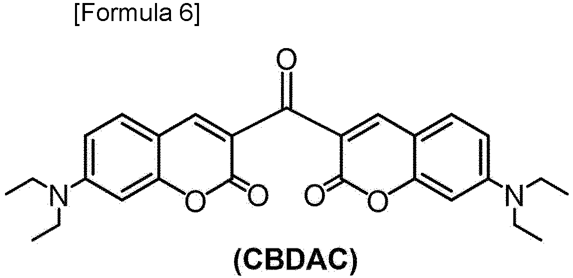

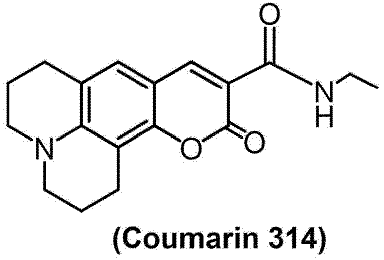

In the optical upconversion organic film of the present exemplary embodiment, the triplet sensitizer is preferably a compound (CBDAC) above. CBDAC is an abbreviation for 3,3'-carbonylbis(7-diethylaminocoumarin).

In the optical upconversion organic film of the present exemplary embodiment, the triplet sensitizer may be an organic metal complex. The "organic metal complex" encompasses both an organometallic compound having a metal-carbon bond and a metal complex having a coordinate bond. The metal complex having a coordinate bond includes metal and a ligand that coordinates to the metal.

The organic metal complex serving as the triplet sensitizer easily transfers light energy to the organic luminescent material. The metal atom that forms the organic metal complex serving as the triplet sensitizer is not particularly limited but is, for instance, at least one metal atom selected from the group consisting of Li, Mg, Al, Ti, V, Mn, Fe, Co, Ni, Cu, Zn, Ga, Ru, Pd, Ag, Re, Os, Ir, Pt, and Pb. The metal atom that forms the organic metal complex serving as the triplet sensitizer is preferably Pt or Pd.

In the optical upconversion organic film of the present exemplary embodiment, when the triplet sensitizer is an organic metal complex, the triplet sensitizer preferably contains a platinum atom and is more preferably an organometallic complex containing a platinum atom.

Examples of the ligand in the organic metal complex include porphyrins and substitution products thereof, such as octaethylporphyrin; phthalocyanines and substitution products thereof, such as tetra-tert-butyl phthalocyanine; and naphthalocyanines and substitution products thereof, such as tetra-tert-butyl naphthalocyanine.

Examples of substituents in the substitution products include hydrocarbon groups such as linear hydrocarbon groups, e.g., alkyl groups (such as a methyl group, ethyl group, and t-butyl group), alkenyl groups (such as a vinyl group and allyl group), and alkynyl groups (such as an ethynyl group and propynyl group); and hydrocarbon groups having an acid group, e.g., carboxyalkyl groups (such as a carboxymethyl group and carboxyethyl group).

Of these, the ligand in the organic metal complex is preferably porphyrin or a substitution product thereof or phthalocyanine or a substitution product thereof, more preferably porphyrin or a substitution product thereof, and still more preferably a substitution product of porphyrin.

Specific examples of the organic metal complex serving as the triplet sensitizer include metal complexes of porphyrin or substitution products thereof and metal complexes of phthalocyanine or substitution products thereof. Of these, metal complexes of porphyrin or substitution products thereof are preferred.

The metal atom included in metalloporphyrins (metal complexes of porphyrins) and metallophthalocyanines (metal complexes of phthalocyanines) is, for instance, at least one metal atom selected from the group consisting of Pt, Pd, Ru, Rh, Ir, Zn, and Cu. Porphyrin and substitution products thereof may be referred to as porphyrins, and phthalocyanine and substitution products thereof may be referred to as phthalocyanines.

It is also preferable that the organic metal complex serving as the triplet sensitizer be at least one metal complex selected from the group consisting of Pt complexes including, as a ligand, porphyrin or a substitution product thereof, Pt complexes including, as a ligand, phthalocyanine or a substitution product thereof, Pt complexes including, as a ligand, naphthalocyanine or a substitution product thereof, Pd complexes including, as a ligand, porphyrin or a substitution product thereof, Pd complexes including, as a ligand, phthalocyanine or a substitution product thereof, and Pd complexes including, as a ligand, naphthalocyanine or a substitution product thereof.

Of the examples of the triplet sensitizer, examples of the triplet sensitizer having a local maximum absorption wavelength in a range from 500 nm to 700 nm and including metal in the structure thereof include a compound represented by a formula (20) below.

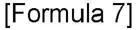

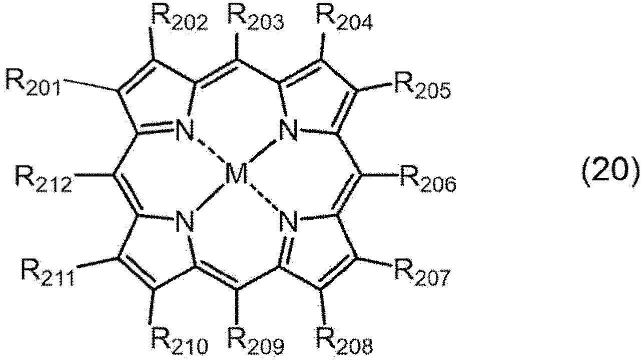

In the formula (20), R₂₀₁, R₂₀₂, R₂₀₄, R₂₀₅, R₂₀₇, R₂₀₈, R₂₁₀, and R₂₁₁ are each independently a hydrogen atom or any substituent including a hydrophilic functional group, R₂₀₁, R₂₀₂, R₂₀₄, R₂₀₅, R₂₀₇, R₂₀₈, R₂₁₀, and R₂₁₁ are mutually the same or different, two of R₂₀₁, R₂₀₂, R₂₀₄, R₂₀₅, R₂₀₇, R₂₀₈, R₂₁₀ and R₂₁₁ that are adjacent to each other may be bonded together to form a five-membered ring or six-membered ring having any substituent including a hydrogen atom, R₂₀₃, R₂₀₆, R₂₀₉, and R₂₁₂ each independently represent an aryl group having any substituent including a hydrogen atom, R₂₀₃, R₂₀₆, R₂₀₉, and R₂₁₂ are mutually the same or different, and M represents a metal atom.

Herein, the term "any substituent including a hydrogen atom" means a hydrogen atom or any substituent other than a hydrogen atom. Furthermore, when a plurality of "any substituents including a hydrogen atom" are present, the plurality of "any substituents including a hydrogen atom" may be bonded together to form a five-membered ring or six-membered ring having any substituent including a hydrogen atom or may not be bonded together.

At least one of R₂₀₁, R₂₀₂, R₂₀₄, R₂₀₅, R₂₀₇, R₂₀₈, R₂₁₀ or R₂₁₁ in the formula (20) is a hydrophilic functional group, and specific examples of the hydrophilic functional group include a hydrogen atom, alkyl group (e.g., alkyl group having 1 to 12 carbon atoms), alkenyl group, alkynyl group, halogen atom, hydroxy group (hydroxyl group), alkylcarbonyloxy group, arylcarbonyloxy group, alkoxycarbonyloxy group, aryloxycarbonyloxy group, carboxylate group, alkylcarbonyl group, arylcarbonyl group, alkoxycarbonyl group, aminocarbonyl group, alkylaminocarbonyl group, dialkylaminocarbonyl group, alkylthiocarbonyl group, alkoxy group, phosphate group, phosphonate group, phosphinate group, thiocarboxylate group, sulfate group, sulfenate group, sulfinate group, sulfonate group, phosphoric acid group, phosphonic acid group, phosphinic acid group, thiocarboxylic acid group, sulfuric acid group, sulfenic acid group, sulfinic acid group, sulfonic acid group, cyano group, amino groups (including alkylamino group, dialkylamino group, arylamino group, diarylamino group, and alkylarylamino group), acylamino groups (including alkylcarbonylamino group, arylcarbonylamino group, carbamoyl group, and ureido group), amidino group, imino group, sulfhydryl group, alkylthio group, arylthio group, alkylsulfinyl group, sulfamoyl group, sulfonamide group, nitro group, trifluoromethyl group, cyano group, azide group, heterocyclic group, alkylaryl group, aryl group, and heteroaryl group; however, the hydrophilic functional group is not limited thereto.

Examples of the substituent on the five-membered ring or six-membered ring formed by bonding together two adjacent ones of R₂₀₁, R₂₀₂, R₂₀₄, R₂₀₅, R₂₀₇, R₂₀₈, R₂₁₀, and R₂₁₁ included in the formula (20) include, but are not limited to, the substituents cited as examples of R₂₀₁, R₂₀₂, R₂₀₄, R₂₀₅, R₂₀₇, R₂₀₈, R₂₁₀, and R₂₁₁. The five-membered ring or six-membered ring may or may not be linked to another substituted or unsubstituted porphyrin ring.

Examples of R₂₀₃, R₂₀₆, R₂₀₉, and R₂₁₂ in the formula (20) include, but are not limited to, substituents cited as examples of R₂₀₁, R₂₀₂, R₂₀₄, R₂₀₅, R₂₀₇, R₂₀₈, R₂₁₀, and R₂₁₁.

The metal atom M in the formula (20) is, for instance, at least one metal atom selected from the group consisting of Pt, Pd, Ru, Rh, Ir, Zn, and Cu.

Examples of the metalloporphyrins represented by the formula (20) include meso-tetraphenyl-tetrabenzoporphyrin metal complexes such as meso-tetraphenyl-tetrabenzoporphyrin palladium (CAS No.: 119654-64-7), octaethylporphyrin metal complexes such as octaethylporphyrin palladium (CAS No.: 24804-00-0), and octaethylporphyrin metal complexes such as meso-tetraphenyl-octamethoxy-tetranaphtho[2,3]porphyrin palladium described in a literature (Y. Murakami et al., J. Phy., Chem. B, 118 (2014) 14442).

Examples of the metallotetraazaporphyrins include a compound represented by a formula (21) below.

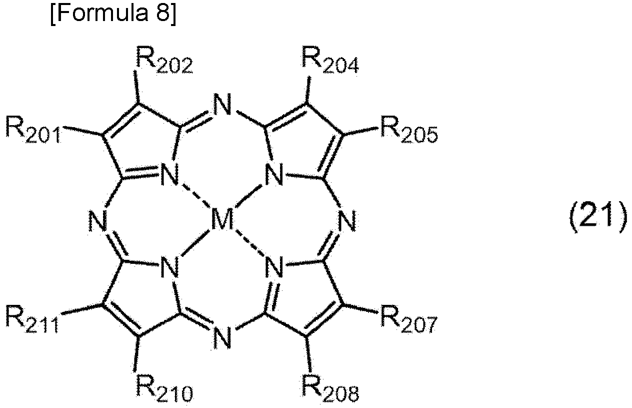

In the formula (21), R₂₀₁, R₂₀₂, R₂₀₄, R₂₀₅, R₂₀₇, R₂₀₈, R₂₁₀, R₂₁₁, and M represent the same as R₂₀₁, R₂₀₂, R₂₀₄, R₂₀₅, R₂₀₇, R₂₀₈, R₂₁₀, R₂₁₁, and M in the formula (20), respectively.

The triplet sensitizer may be an organic photosensitizing molecule that includes no metal in the structure thereof. Use of the triplet sensitizer including no metal can avoid the generation of environmental pollution due to metal in the production and disposal of the optical upconversion organic film. Specific examples of the triplet sensitizer including no metal include a compound represented by a formula (22) below (boron dipyrromethenes) and C70. These triplet sensitizers may be used alone or as a mixture of two or more thereof.

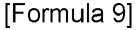

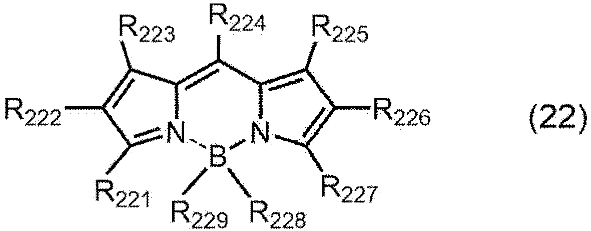

In the formula (22), R₂₂₁ to R₂₂₇ each independently represent a hydrogen atom or any substituent including a hydrophilic functional group, at least one of R₂₂₁ to R₂₂₇ is a hydrophilic functional group, among R₂₂₁ to R₂₂₇, substituents adjacent to each other (at least one of the pair of R₂₂₁ and R₂₂₂, the pair of R₂₂₂ and R₂₂₃, the pair of R₂₂₅ and R₂₂₆, or the pair of R₂₂₆ and R₂₂₇) may be bonded together to form a five-membered ring or six-membered ring having any substituent including a hydrogen atom, and R₂₂₈ and R₂₂₉ each independently represent a halogen atom, a hydrophilic functional group, a substituted or unsubstituted alkyl group having 1 to 5 carbon atoms, or a substituted or unsubstituted alkoxy group having 1 to 5 carbon atoms.

At least one of R₂₂₁ to R₂₂₇ in the formula (22) is a hydrophilic functional group, and specific examples of the hydrophilic functional group include, but are not limited to, a hydrogen atom, aliphatic hydrocarbon groups such as alkyl group, alkenyl group, and alkynyl group, halogen atom, hydroxy group (hydroxyl group), alkylcarbonyloxy group, arylcarbonyloxy group, alkoxycarbonyloxy group, aryloxycarbonyloxy group, carboxylate group, alkylcarbonyl group, arylcarbonyl group, alkoxycarbonyl group, aminocarbonyl group, alkylaminocarbonyl group, dialkylaminocarbonyl group, alkylthiocarbonyl group, alkoxy group, phosphate group, phosphonate group, phosphinate group, thiocarboxylate group, sulfate group, sulfenate group, sulfinate group, sulfonate group, phosphoric acid group, phosphonic acid group, phosphinic acid group, thiocarboxylic acid group, sulfuric acid group, sulfenic acid group, sulfinic acid group, sulfonic group, cyano group, amino groups (including alkylamino group, dialkylamino group, arylamino group, diarylamino group, and alkylarylamino group), acylamino groups (including alkylcarbonylamino group, arylcarbonylamino group, carbamoyl group, and ureido group), amidino group, imino group, sulfhydryl group, alkylthio group, arylthio group, alkylsulfinyl group, sulfamoyl group, sulfonamide group, nitro group, trifluoromethyl group, cyano group, azide group, heterocyclic group, alkylaryl group, phenoxy group, aryl group, heteroaryl group, and heteroaryloxy group.

Examples of the substituent on the five-membered ring or six-membered ring formed by bonding together substituents adjacent to each other (at least one of the pair of R₂₂₁ and R₂₂₂, the pair of R₂₂₂ and R₂₂₃, the pair of R₂₂₅ and R₂₂₆, or the pair of R₂₂₆ and R₂₂₇) included in the formula (22) include, but are not limited to, the substituents cited as examples of R₂₂₁ to R₂₂₇.

R₂₂₁, R₂₂₃, R₂₂₅, and R₂₂₇ in the formula (22) may be each independently, for instance, a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by a formula (23) below, or a 2-carboxyl-2-cyanoethenyl group represented by a formula (24) below.

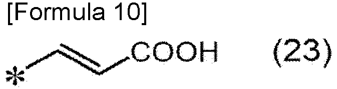

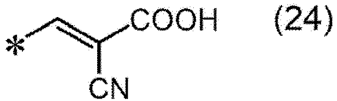

R₂₂₂ and R₂₂₆ in the formula (22) are preferably each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

More preferably, R₂₂₂ and R₂₂₆ in the formula (22) are each independently a hydrogen atom, a bromine atom, or an iodine atom, and at least one of R₂₂₂ or R₂₂₆ is a bromine atom or an iodine atom.

Still more preferably, R₂₂₂ and R₂₂₆ in the formula (22) are each independently a hydrogen atom or an iodine atom, and at least one of R₂₂₂ or R₂₂₆ is an iodine atom.

R₂₂₄ in the formula (22) is preferably a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

R₂₂₄ in the formula (22) is more preferably a substituted or unsubstituted phenyl group.

R₂₂₄ in the formula (22) is still more preferably an unsubstituted phenyl group, an alkyl-substituted phenyl group, or a phenyl group having a hydrophilic functional group.

R₂₂₈ and R₂₂₉ in the formula (22) are each independently a halogen atom, a hydrophilic functional group, a substituted or unsubstituted alkyl group having 1 to 5 carbon atoms, or a substituted or unsubstituted alkoxy group having 1 to 5 carbon atoms, and R₂₂₈ and R₂₂₉ in the formula (22) are preferably fluorine atoms.

The compound represented by the formula (22) is more preferably a compound in which R₂₂₁ to R₂₂₇ are each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

The compound represented by the formula (22) is still more preferably a compound represented by a formula (25) below. The compound represented by the formula (25) below can achieve an optical upconversion material having a higher optical wavelength conversion efficiency.

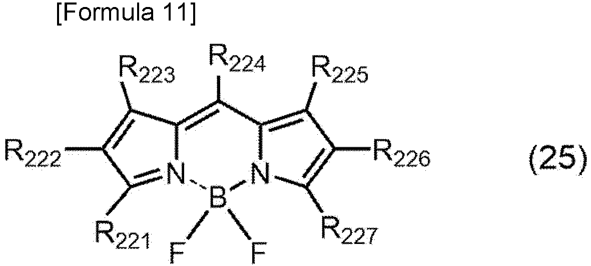

In the formula (25), R₂₂₁, R₂₂₃, R₂₂₅, and R₂₂₇ each independently represent a hydrophilic functional group or a substituted or unsubstituted alkyl group having 1 to 3 carbon atoms, R₂₂₂ and R₂₂₆ each independently represent a hydrogen atom, a bromine atom, or an iodine atom, at least one of R₂₂₂ or R₂₂₆ is a bromine atom or an iodine atom, and R₂₂₄ represents a substituted or unsubstituted phenyl group.

The triplet sensitizer may be a metalloporphyrin represented by the formula (20) or a compound represented by the formula (22).

In the optical upconversion organic film of the present exemplary embodiment, specific examples of the triplet sensitizer include the following compounds; however, the invention is not limited to the following compounds.

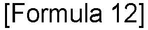

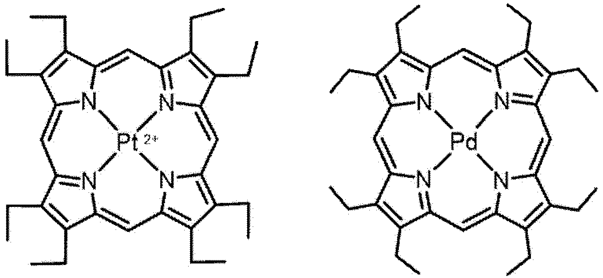

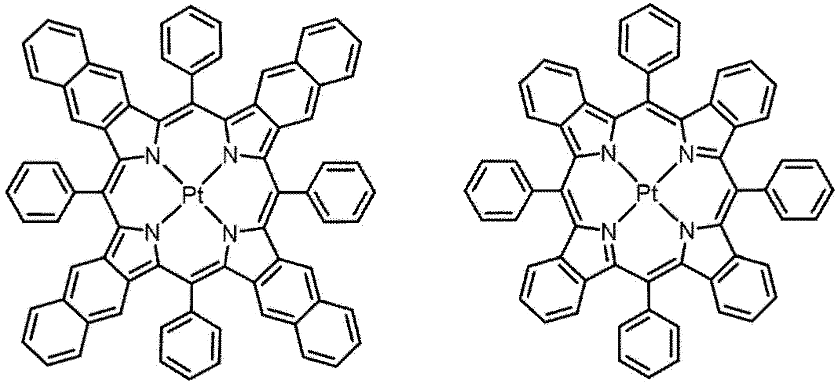

The optical upconversion organic film of the present exemplary embodiment is also producible in one of the production methods described in the first, second, and third exemplary embodiments. Further, the optical upconversion organic film of the present exemplary embodiment is also producible in one of the producing apparatuses described in the first, second, and third exemplary embodiments.

According to the present exemplary embodiment, it is possible to provide an optical upconversion organic film capable of stable upconversion of light in the visible light region into light in the ultraviolet light region in the atmosphere, and exhibiting a high upconversion quantum efficiency at an excitation light intensity lower than the intensity of sunlight irradiated on the earth's surface (e.g., the excitation intensity about 0.3 times the sunlight intensity). In addition, according to one aspect of the present exemplary embodiment, it is possible to provide an optical upconversion organic film that exhibits high durability to excitation light and has high light irradiation stability. The optical upconversion organic film of the present exemplary embodiment can function as ultraviolet light generating material. Therefore, the optical upconversion organic film of the present exemplary embodiment can greatly expand the usefulness of sunlight on the ground in various fields that require ultraviolet light.

Further, in the optical upconversion organic film of the present exemplary embodiment, since neither the triplet sensitizer nor the organic luminescent material is an ionic material (ionic liquid), the optical upconversion organic film of the present exemplary embodiment is also chemically stable. Furthermore, the optical upconversion organic film of the present exemplary embodiment can be used in air, and exhibits upconversion luminescence in air.

The optical upconversion organic film of the present exemplary embodiment is applicable to various usages (e.g., photocatalysis, solar cells, and photo-organic synthesis).

### Modifications

The scope of the invention is not limited by each of the above-described exemplary embodiments but includes any modification, improvement, and combination(s) of the exemplary embodiments as long as such modification, improvement and combination(s) are compatible with the invention.

In the first exemplary embodiment, the first heating section 131 includes the first rod heaters 131A and 131B, and the second heating section 132 includes the second rod heaters 132A and 132B. However, the first heating mechanism 13 is not limited to including the above-described rod heaters, and any heating mechanism that generates a temperature gradient along the X direction in the first clamping section 12A and the second clamping section 12B may be used. For instance, the temperature gradient may be generated by winding a first electric wire heater around the respective -X-side ends of the first clamping section 12A and the second clamping section 12B, and winding a second electric wire heater around the respective +X-side ends thereof, and separately controlling the current values flowing through the electric wire heaters.

In the first exemplary embodiment, a configuration is exemplified in which the first clamping section 12A and the second clamping section 12B are provided with the temperature sensors 134 constituted by, for instance, thermocouples. In the second and third exemplary embodiments, the similar temperature sensors may be provided. In the second exemplary embodiment, for instance, the temperature sensors may be arranged along the X direction in the pair of guide plates 22A and 22B to measure the temperature gradient in the guide plates 22A and 22B. In this case, feedback control of the second heating mechanism 23 may be performed on the basis of the measured temperature gradient.

Similarly, in the third exemplary embodiment, the temperature sensor may be provided for each of the roller pairs 32. Alternatively, the temperature sensors may be provided for each of the pair of support plates 31A and 31B along the X direction.

In the first exemplary embodiment, a configuration is exemplified in which the pair of clamping sections 12A and 12B are sandwiched between the heat insulators 135 to inhibit heat outflow from the clamping sections 12A and 12B to the fixed stage 142 and the movable stage 143, but the invention is not limited thereto. In the first exemplary embodiment, it is possible to improve heat insulating properties by forming a gap between the first clamping section 12A and the fixed stage 142 and between the second clamping section 12B and the movable stage 143, in order to decompress the inside of vacuum chamber 151.

In each of the first to third exemplary embodiments, the environment where the precursor holder 11, 21, or 31 is installed is decompressed and the powder precursor 111 is pressed, but the invention is not limited thereto. For instance, the powder precursor 111 may be pressed under atmospheric pressure. In this case, generation of air bubble can be inhibited by leaving still the powder precursor 111 under atmospheric pressure.

### Examples

The invention will be described in further detail with reference to Examples. The invention is by no means limited to these Examples.

### Compounds

The structure of a triplet sensitizer used in producing optical upconversion organic films of Examples 1 to 5 is given below.

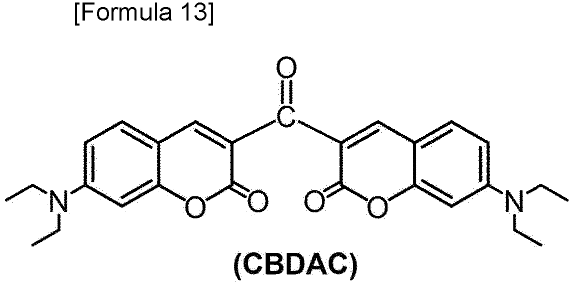

The structure of an organic luminescent material used in producing the optical upconversion organic films of Examples 1 to 5 is given below.

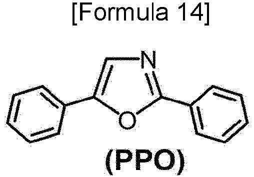

### Production of Optical Upconversion Organic Film

Using CBDAC serving as the triplet sensitizer and PPO serving as the organic luminescent material, the optical upconversion organic films of Examples 1 to 5 were produced as follows.

PPO with a purity of 99% manufactured by Sigma-Aldrich Co. LLC and CBDAC with a purity of over 98% manufactured by Tokyo Chemical Industry Co., Ltd. were used. The purchased CBDAC was a methanol solution (4×10⁻⁴ M), and this CBDAC methanol solution was filtered using a PTFE membrane filter (manufactured by Merck-LG, product name: SLLGX13NL, pore size: 200 nm) to remove any particulates that may be present in the CBDAC methanol solution. The obtained methanol solution was used for sample preparation.

Specifically, the filtered CBDAC methanol solution (4×10⁻⁴ M) was added dropwise to the PPO powder using a mechanical pipette to form a mixed powder of CBDAC and PPO (at a molar ratio 1:30,000). This mixed powder was evacuated for 15 minutes in a vacuum tank connected to a dry scroll pump to remove the methanol. Finally, the mixture was pulverized in a quartz mortar to obtain a homogeneous mixture of PPO and CBDAC.

The mixed powder of CBDAC and PPO (mass: about 32 mg, CBDAC:PPO = 1:30,000 (molar ratio)) was placed inside an SUS spacer ring (thickness: 200 µm, inner diameter: 8 mm) and sandwiched between two round glass substrates (glass substrates manufactured by Corning Incorporated (product name: EAGLE XG (registered trademark), diameter: 12 mm, thickness: 0.7 mm) cut into circles by Matsunami Glass Ind., Ltd.) When the optical upconversion organic film was produced, an aluminum thin film (thickness: 50 nm) was deposited on only one surface of each of the two glass substrates, and the mixed powder was sandwiched between the other surfaces of the glass substrates on which aluminum was not deposited. For sample preparation for optical property measurement described later, the glass substrate to which a prepared upconversion organic film was adhered, and the glass substrate on which aluminum was not deposited were used. For sample preparation for optical microscope observation described later using bottom-transmitted illumination, two glass substrates on which aluminum was not deposited were used. A precursor holder was prepared in this manner, and the optical upconversion organic films were produced according to "Production Method of Optical Upconversion Organic Film" described in the first exemplary embodiment.

The optical upconversion organic films of Examples 1 to 5 were produced by controlling the temperature difference ΔT between both ends of the pair of clamping sections 12A and 12B to less than 1.3 degrees C in Example 1, 10 degrees C in Example 2, 20 degrees C in Example 3, 25 degrees C in Example 4, and 30 degrees C in Example 5, respectively.

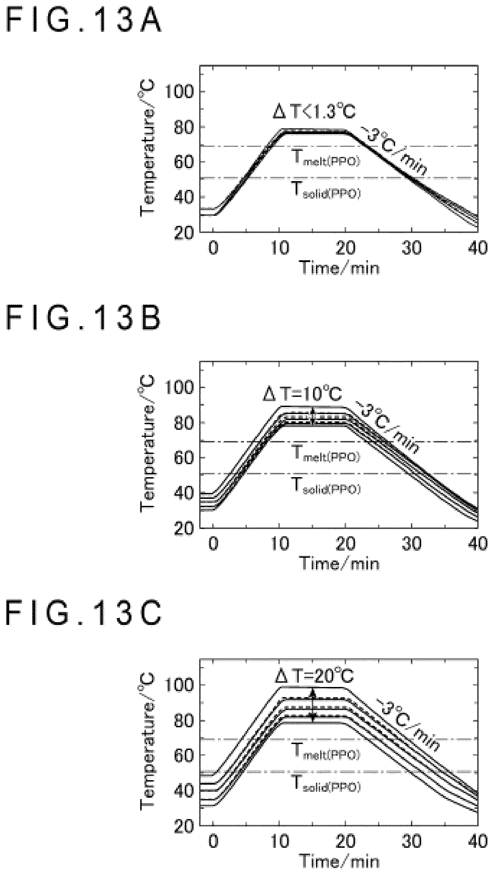

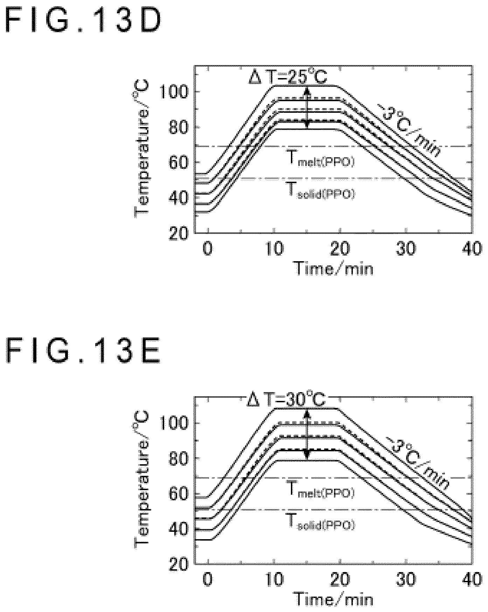

Figs. 13A, 13B, 13C, 13D, and 13E illustrate time-dependent temperature profiles recorded by thermocouples, as in Fig. 5. Fig. 13A is a graph of a temperature change in Example 1 (ΔT < 1.3 degrees C), Fig. 13B is a graph of a temperature change in Example 2 (ΔT = 10 degrees C), Fig. 13C is a graph of a temperature change in Example 3 (ΔT = 20 degrees C), Fig. 13D is a graph of a temperature change in Example 4 (ΔT = 25 degrees C), and Fig. 13E is a graph of a temperature change in Example 5 (ΔT = 30 degrees C). The minimum possible ΔT was 0.9 ± 0.4 degrees C due to the heat sink provided at only one side, and ΔT in Example 1 was expressed as ΔT < 1.3 degrees C accordingly. In Figs. 13A, 13B, 13C, 13D, and 13E, solid lines correspond to the lines L1 to L5 in Fig. 5, dashed lines correspond to the lines L6 to L8 in Fig. 5, T_{melt(PPO)} represents the melting temperature of PPO, and T_{solid(PPO)} represents the coagulation temperature of PPO. In Examples 1 to 5, the cooling rate was -3 degrees C/min.

It is believed that no organic solvent is contained in the optical upconversion organic films produced in Examples 1 to 5 due to evacuation during the preparation of the mixed powder and the production of the optical upconversion organic films. Even if any organic solvent is contained, it is believed to be of an extremely small amount below the measurement limit.

### Evaluation of Properties such as Physical Properties

### Optical Microscope Observation

The optical upconversion organic films of Examples 1 to 5 were each observed with an optical microscope. The optical microscope observation was performed using a polarization microscope (a microscope manufactured by Olympus Corporation: product name "BX-53") using transmitted illumination. The polarization microscope observation was performed in a Crossed Nicol arrangement.

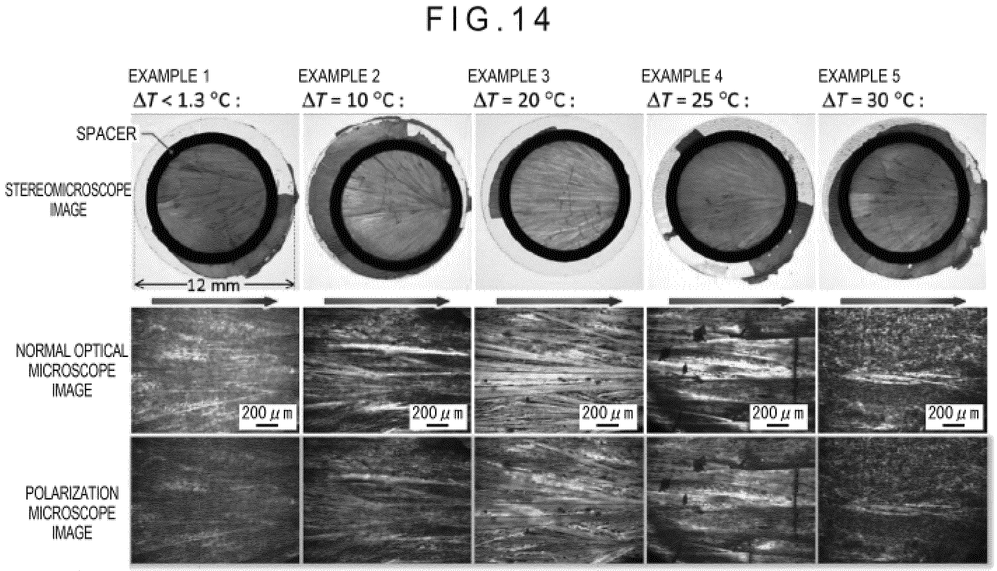

In Fig. 14, three types of photographs for each of the optical upconversion organic films of Examples 1 to 5 are given. In the upper part of Fig. 14, stereomicroscope images taken with transmitted illumination of the obtained optical upconversion organic films are given, in the middle and lower parts, magnified microscope images taken with transmitted illumination of the optical upconversion organic films are given. The images in the middle part are normal microscope images, and the images in the lower part are polarization microscope images. Right-pointing arrows illustrated between the photographs in the upper and middle parts of Fig. 14 each indicate a temperature gradient with a high temperature on the left side and a low temperature on the right side.

From the images in Fig. 14, it was found that the optical upconversion organic films of Examples 1 to 5 were mainly constituted by single crystal stripes grown along the temperature gradient. Therefore, the crystal of the organic luminescent material (PPO), which is a primary constituent material of the optical upconversion organic films of Examples 1 to 5, was found to have uniaxial orientation. The term "uniaxial orientation" herein means that polycrystalline domains constituting the optical upconversion organic film extend along a direction of the temperature gradient to form crystal stripes, and the extending direction thereof approximately follows the direction of the temperature gradient. Thus, the extending direction needs not strictly coincide with the direction of the temperature gradient. The microscope observation of an organic film made of PPO alone without CBDAC was performed in a similar manner to the above, and it was found that PPO was a material having uniaxial orientation.

Under the condition of ΔT < 1.3 degrees C in Example 1, a microcrystalline film accompanied by strong light scattering was generated. This is believed to be caused by sudden solidification over the entire region of a sample. Under the condition of ΔT = 20 degrees C in Example 3, the optical upconversion organic film had relatively clear single crystal stripes grown mainly along the temperature gradient. The respective widths of the single crystal stripes observed with the microscope were mostly in a range from 30 µm to 80 µm. The results given in Fig. 14 indicate influence of the temperature gradient on properties of the obtained optical upconversion organic films. Similar directional crystallization along a temperature gradient is also observed in a film formed on a substrate from the melted material of p-type and n-type organic semiconductor blend.

When ΔT was increased in a range from 25 degrees C to 30 degrees C as in Examples 4 and 5, the optical upconversion organic film was microcrystallized, which decreased transparency of the film. This indicates that a more appropriate cooling rate of a solidification front for achieving the crystal stripe growth was obtained under the condition of ΔT = 20 degrees C as in Example 3. The optical upconversion organic film produced under the conditions of ΔT = 20 degrees C and a cooling rate of -1 degrees C/min was also a microcrystalline film. Adjustment to the appropriate cooling rate was found to be desirable to prevent the directionality of the crystal stripes growth from being disturbed.

### X-ray Diffraction Measurement and Single Crystal X-ray Structure Analysis

Powder X-ray diffraction (PXRD) measurement was performed on the organic luminescent material used as a raw material and the produced optical upconversion organic film.

The PXRD measurement was performed at 298K using Cu Kα radiation with an X-ray diffractometer (manufactured by Rigaku Corporation, product name: SmartLab). The optical upconversion organic film was cut into fine powder with a razor blade and annealed for 30 minutes at 66 degrees C in a dry nitrogen gas atmosphere. About 50 mg of the annealed fine powder was sandwiched between two Mylar (registered trademark) films and set on a measurement table of the X-ray diffractometer. During the measurement, the measurement table was rotated at 120 rpm with a scan step of 0.01 degrees and a scan speed of 0.5 degrees/min.

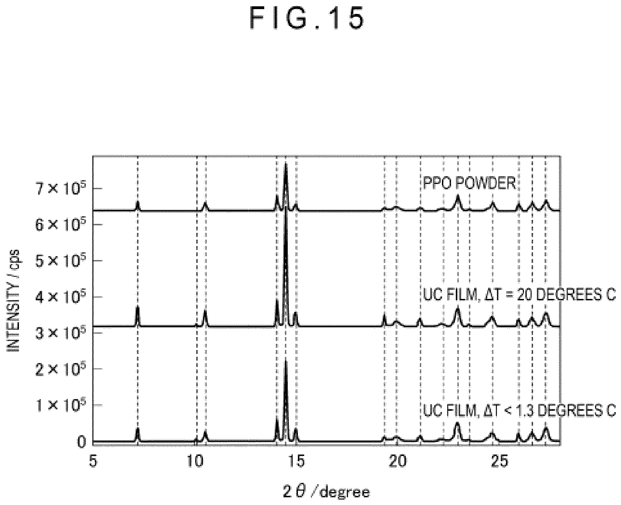

Fig. 15 illustrates powder X-ray diffraction (PXRD) patterns. In Fig. 15, the PXRD pattern in an upper part is of the obtained PPO powder, the PXRD pattern in a middle part is of the optical upconversion organic film of Example 3 (UC film, ΔT = 20 degrees C), and the PXRD pattern in a lower part is of the optical upconversion organic film of Example 1 (UC film, ΔT < 1.3 degrees C). In Fig. 15, the optical upconversion organic films produced in Examples exhibit the same PXRD pattern as the PPO powder, which indicates that there is no polymorphism.

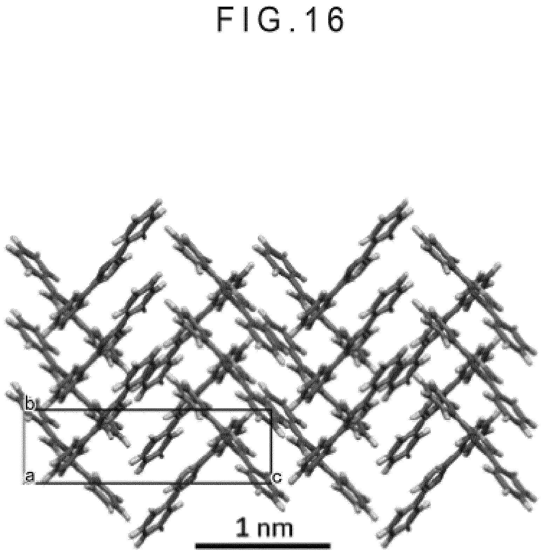

Fig. 16 illustrates a crystal structure of PPO obtained by Pawley analysis and Rietveld analysis. The Pawley and Rietveld analyses were performed using molecular modeling and simulation software (manufactured by Dassault Systems, Inc., product name: BIOVIA Materials Studio 2022 (registered trademark)). The herringbone packing of PPO was elucidated by the Pawley and Rietveld analyses.

### Photophysical Properties

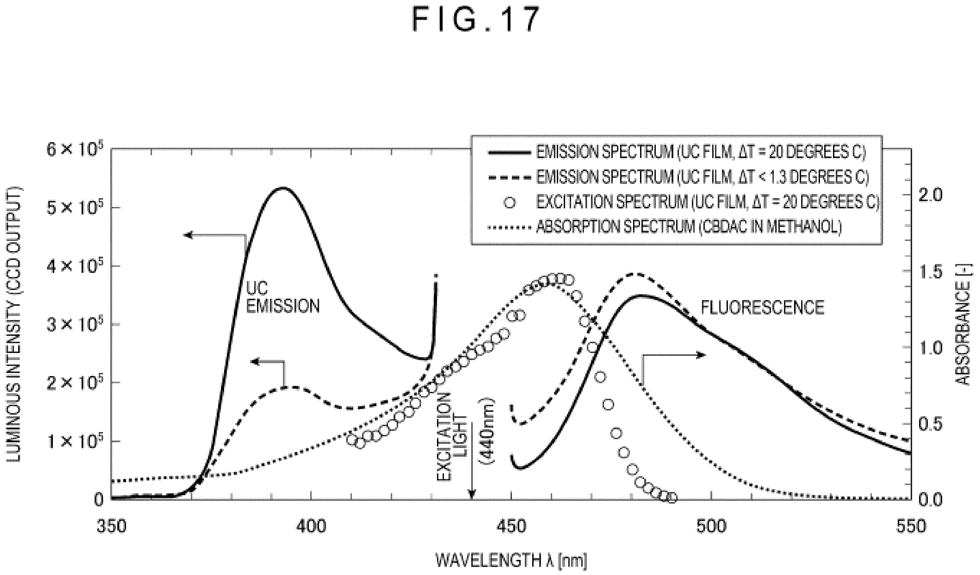

Fig. 17 illustrates photophysical properties of the optical upconversion organic film and CBDAC.

First, Fig. 17 illustrates an excitation spectrum of the optical upconversion organic film of Example 3 produced at ΔT = 20 degrees C. The excitation spectrum was obtained by irradiating the optical upconversion organic film with pulsed light generated from a wavelength-tunable optical parametric oscillator (manufactured by EKSPLA, product name: NT-242, pulse duration: about 3 ns, repetition frequency: 100 Hz). The excitation spectrum was obtained as follows: UC luminous intensities in a range from 380 nm to 390 nm were integrated, and a UC luminous intensity obtained by the integration was plotted with respect to a wavelength of the laser beam that was changed from 410 nm to 488 nm while pulse energy was maintained at 10 µJ.

Fig. 17 also illustrates an absorption spectrum (optical path length = 1 mm) of a methanol solution of CBDAC (concentration: 2 x 10⁻⁴ M).

By irradiating the optical upconversion organic films of Examples 1 to 5 with a laser beam having a wavelength λ = 440 nm, UC emission reaching a peak in a wavelength range from 390 nm to 393 nm was observed, and fluorescence from CBDAC reaching a peak in a wavelength range from 480 nm to 490 nm was also observed. The UC luminous intensity from the optical upconversion organic film of Example 3 (ΔT = 20 degrees C) was stronger than that of the optical upconversion organic film of Example 1 (ΔT < 1.3 degrees C). This is because the optical upconversion organic film of Example 3 has high crystallinity.

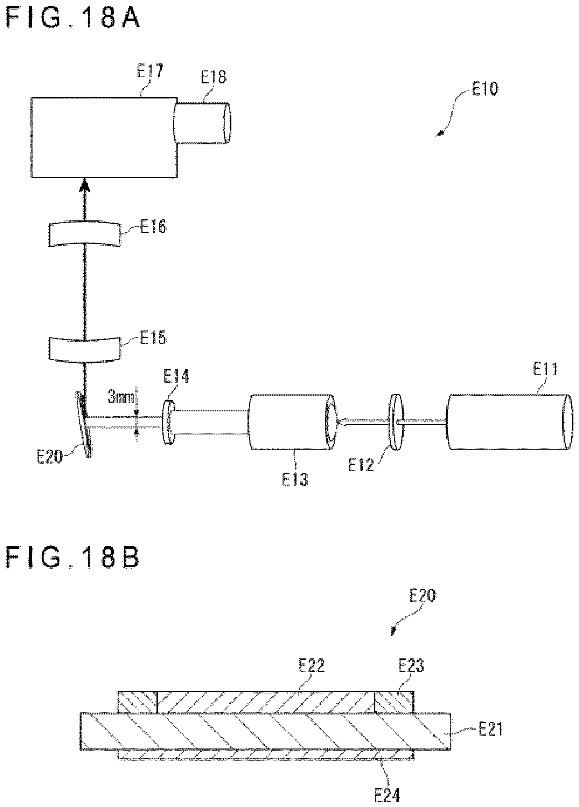

The photophysical properties were measured using a setup E10 illustrated in Fig. 18A. A continuous wave (CW) laser with a wavelength of 440 nm was generated from a laser oscillator E11, and the CW laser passed through a neutral density filter (ND filter) E12, a beam expander E13, and an iris E14 to irradiate a sample E20. At the position of the sample E20, a laser beam diameter was about 3 mm, and a beam profile had a top hat shape. Fig. 18B is an enlarged cross-sectional view of the sample E20 used for measuring the photophysical properties. An optical upconversion organic film E22 having a thickness of 200 µm was held on one surface of a glass substrate E21 of the sample E2. The periphery of the optical upconversion organic film E22 was surrounded by a spacer E23 having a thickness of 200 µm. The other surface of the glass substrate E21 was provided with a 50 nm-thick aluminum layer serving as a light reflective layer E24. The glass substrate E21 of the sample E20 was positioned so that the optical upconversion organic film E22 was irradiated with a laser beam, and was held at an angle (at about 5 degrees) slightly deviated from a normal incidence direction of the laser beam, as schematically illustrated in Fig. 18A. Two achromatic lenses E15 and E16 were used to collect photoelectron emission from the optical upconversion organic film E22 and to focus it on an entrance slit of a monochromator E17 (manufactured by Princeton Instruments, product name: SP-2300i). The spectrum was recorded by an array-type CCD detector E18 (manufactured by Princeton Instruments, product name: "PIXIS:100BR") attached to an exit of the monochromator E17.

The fluorescence quantum yield Φ_{F(s)} (see Fig. 12) of CBDAC in an optical upconversion organic film, in which a small amount of CBDAC is doped into a polycrystalline film of PPO, is measured to be 5.1% using an absolute PL quantum yield spectrometer (manufactured by Hamamatsu Photonics K.K., product name: Quantaurus-QY). The optical upconversion quantum efficiency (UC quantum efficiency) Φ_{UC} can thus be determined by referring to a fluorescence intensity after correcting wavelength dependency of the CCD detector and the diffraction grating of the monochromator. Here, photoelectron emission having a wavelength λ ≤ 425 nm is defined as the UC emission. In this definition, ultraviolet (UV) photons having a wavelength λ less than 400 nm accounted for 60.1% of the UC photons of the optical upconversion organic film of Example 3 (ΔT = 20 degrees C). The optical upconversion organic film of Example 3 exhibited a higher efficiency (Φ_{UC} = 4.3% at the maximum, which corresponds to a normalized upconversion luminous efficiency η_{UC} = 8.6%: η_{UC} ≡ 2Φ_{UC}) than the optical upconversion organic film of Example 1 (ΔT < 1.3 degrees C).

### Excitation Threshold Intensity

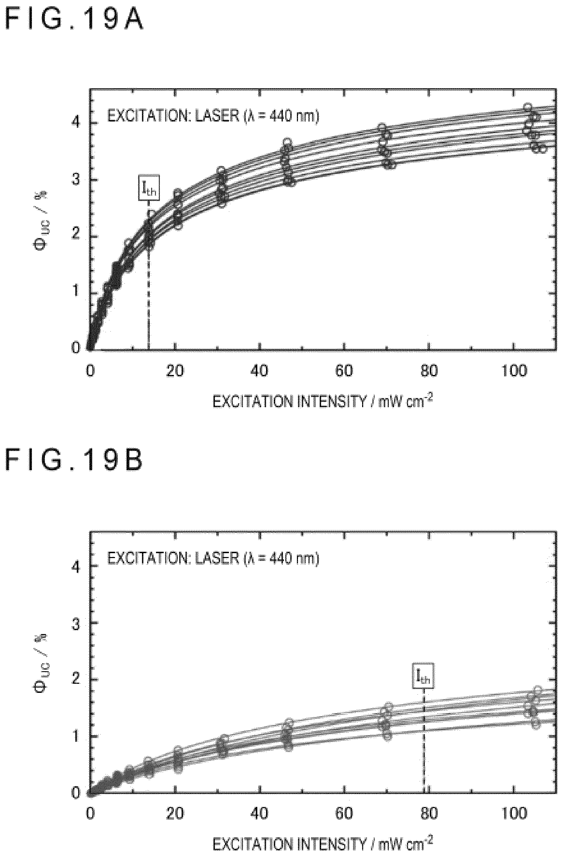

The optical upconversion organic film of Example 3 exhibited the excitation threshold intensity (Iₜₕ) lower than that of the optical upconversion organic film of Example 1 (see Figs. 19A and 19B).

Figs. 19A and 19B illustrate the dependency of Φ_{UC} on the excitation intensity at a wavelength of 440 nm. Fig. 19A is a graph related to the optical upconversion organic film of Example 3, and Fig. 19B is a graph related to the optical upconversion organic film of Example 1. In Figs.19A and 19B, data obtained by measuring Φ_{UC} for ten pieces of the optical upconversion organic films of each of Example 1 and Example 3 is given, where plots represent the actually measured values and solid lines represent the theoretical curve fit.

The upconversion threshold intensity (unit: mW/cm²) of the produced optical upconversion organic films was measured by the following method. It is known that, in upconversion emission by TTA, the upconversion luminous intensity is proportional to the square of excitation light in a region where the excitation light intensity is weak, and the upconversion luminous intensity is proportional to the first power of excitation light in a region where the excitation light intensity is strong. The excitation light (wavelength: 440 nm) intensity dependency of the upconversion luminous intensity was measured, and an excitation light intensity at which the inclination of the intensity dependency changed from 2 to 1 on a log-log plot was defined as the upconversion threshold intensity. This means that efficient upconversion emission occurs at a lower excitation light intensity as the threshold intensity is lowered.

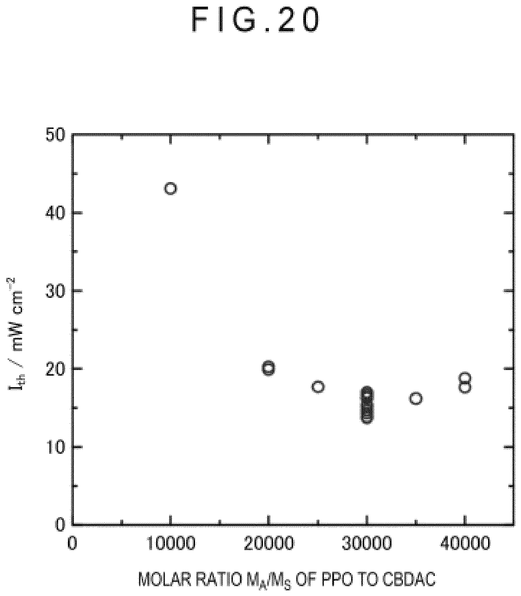

Fig. 20 is a graph illustrating a relationship between the excitation threshold intensity (Iₜₕ) of the optical upconversion organic film produced under the condition of ΔT = 20 degrees C and the molar ratio M_{A}/M_{S} of PPO to CBDAC. The molar ratio M_{A}/M_{S} is the ratio of the number of moles M_{A} of PPO to the number of moles M_{S} of CBDAC in the optical upconversion organic film. The molar ratio between the triplet sensitizer and the organic luminescent material contained in the optical upconversion organic film corresponds directly to the material charging ratio when preparing the mixed powder. As illustrated in Fig. 20, when the molar ratio M_{A}/M_{S} exceeded 10,000, the excitation threshold intensity (Iₜₕ) tended to be further lowered. It was found that the performance of the optical upconversion organic film was further improved by adjusting the molar ratio M_{A}/M_{S}.

On the basis of the dependency of the UC luminous intensity on the intensity of simulated sunlight (unit: SUN), the excitation threshold intensity (Iₜₕ) for sunlight irradiation was also measured. Simulated sunlight of Air Mass 1.5 (AM1.5) was generated by a solar simulator (manufactured by Asahi Spectra Co., Ltd., product name: HAL-320). The broadband light generated by the solar simulator was let through a long-pass filter, the optical upconversion organic film was irradiated only with the light in a wavelength region exceeding 413 nm (λ > 413 nm), and the UC luminous intensity was measured. AM1.5 represents the sunlight spectrum intensity that falls on the earth, and is global standard data established by the National Renewable Energy Laboratory (NREL) of the U.S. Department of Energy, and a unit "SUN" represents the intensity of sunlight. The intensity of the simulated sunlight at a sample position was set as follows. First, without using the long-pass filter, a 1 SUN checker (manufactured by Asahi Spectra Co., Ltd., product name: CS-20) was placed at the sample position, and the intensity was set to "one day" intensity by adjusting the output of the solar simulator. Next, the long-pass filter was installed. After the installation, since the long-pass filter indicated a transmittance of about 98% in a wavelength range of light absorption by CBDAC, the output of the solar simulator was increased by 1.02 times in order to compensate for a decrease in the light intensity at the sample position due to the installation of the long-pass filter. The light intensity at the sample position in this state was defined as 1 SUN. The measurement procedure and conditions are described in R. Enomoto, M. Hoshi, H. Oyama, H. Agata, S. Kurokawa, H. Kuma, H. Uekusa and Y. Murakami, Mater. Horiz., 2021, 8, 3449.

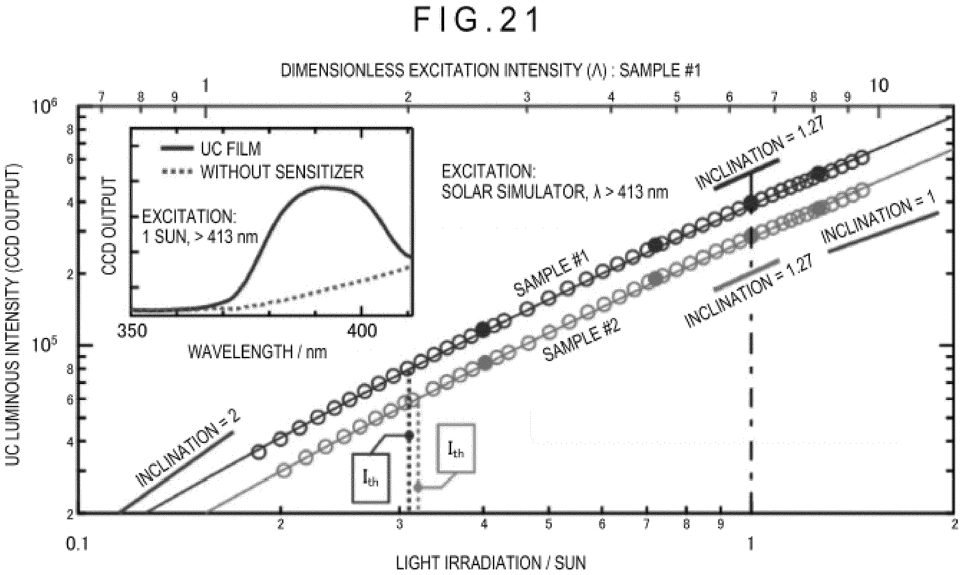

Fig. 21 is a graph illustrating sunlight intensity dependency of the optical upconversion luminous intensity. Fig. 21 also illustrates a dimensionless excitation intensity (Λ) for two samples (samples #1 and #2) of the optical upconversion organic film of Example 3 (ΔT = 20 degrees C). The value of the excitation threshold intensity (Iₜₕ) of the optical upconversion organic film of Example 3 was found to be about 0.3 SUN. This indicates that the optical upconversion organic film of Example 3 can be used for sunlight without a condensing optical system. In Fig. 21, the plots represent the actually measured values and the theoretical curve fit. An inserted figure in Fig. 21 illustrates an emission spectrum from a sample under 1 SUN irradiation (in a solid line) and an emission spectrum from a reference sample prepared without the sensitizer (in a dotted line).

In Figs. 19A, 19B, and 21, excitation light power was first increased and data indicated by non-filled marks was obtained, and then data indicated by filled marks was obtained for confirmation of reproducibility and sample stability. The theoretical fit curve and the dimensionless excitation intensity Λ are based on the literature (Y. Murakami and K. Kamada, Phys. Chem. Chem. Phys., 2021, 23, 18268.) The dimensionless excitation intensity Λ = 2 corresponds to the excitation threshold intensity (Iₜₕ).

### Photostability

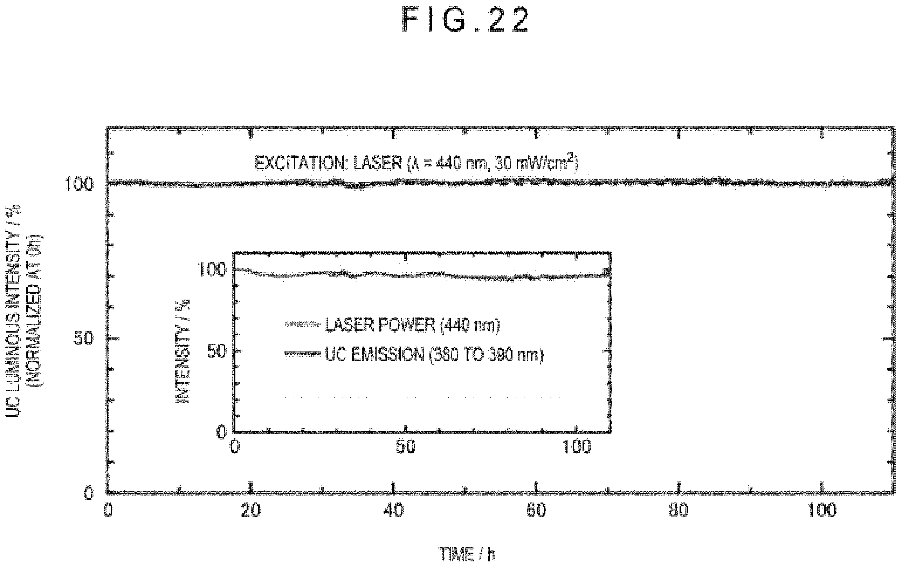

Fig. 22 is a graph relating to photostability of the optical upconversion organic film. Using the device illustrated in Fig. 18A, the optical upconversion organic film of Example 3 (ΔT = 20 degrees C) was continuously irradiated with a laser beam having a wavelength of 440 nm at an intensity of 30 mW/cm² in the atmosphere to evaluate the photostability. An ordinate axis of the graph in Fig. 22 represents the optical upconversion luminous intensity that was corrected by the time fluctuation of the laser beam illustrated in an inserted figure.

In this photostability test, the optical upconversion organic film was irradiated with a laser beam with λ = 440 nm at an intensity of 30 mW/cm², which was much higher than the excitation threshold intensity (Iₜₕ), in the atmosphere. Nevertheless, as illustrated in Fig. 22, the optical upconversion organic film exhibited excellent photostability for at least 100 hours or more, which largely exceeded the photostability of typical TTA-UC.

### Practicality

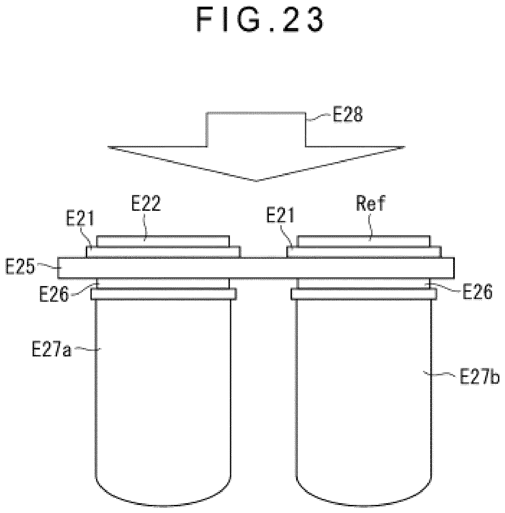

Fig. 23 is a schematic diagram of an experimental method giving an example of practicality of the optical upconversion organic film.

Two empty glass vials E27a and E27b (both of which are the same in an outer diameter of 8 mm and a height of 35 mm) were prepared, and a small amount of ultraviolet-curing resin E26 (manufactured by Bondic, product name: BD-SKCJ) was applied to upper surfaces of mouths of the glass vials E27a and E27b. A slide glass E25 was placed on the ultraviolet-curing resin E26 to cover the mouths of the glass vials E27a and E27b. Next, on the slide glass E25, a glass substrate E21 on which an optical upconversion organic film E22 of Example 3 (ΔT = 20 degrees C) was produced was placed at a position corresponding to the mouth of the glass vial E27a, and another glass substrate E21 on which a comparative film Ref containing no triplet sensitizer was produced was placed at a position corresponding to the mouth of the glass vial E27b. The comparative film Ref was produced in the same manner as in Example 3, except for containing no triplet sensitizer (CBDAC). The optical upconversion organic film E22 and the comparative film Ref were irradiated from above for 3 minutes with light E28 of 1 SUN with a wavelength exceeding 413 nm (λ > 413 nm) that had been generated by the solar simulator and had passed through a long-pass filter. After the light irradiation, only the ultraviolet-curing resin E26 placed under the optical upconversion organic film E22 was cured, and the glass vial E27a was adhered to the slide glass E25. On the other hand, the ultraviolet curing resin E26 placed under the comparative film Ref was not cured, and the glass vial E27b was not adhered to the slide glass E25. This experimental result indicates the practicality of the optical upconversion organic film of the invention in the atmosphere.

### Fluorescence Quantum Yield

The fluorescence quantum yield Φ_{F(A)} of PPO was 79%. The quantum yield was measured using the absolute PL quantum yield spectrometer (manufactured by Hamamatsu Photonics K.K., product name: Quantaurus-QY). The fluorescence quantum yield Φ_{F(A)} of PPO was measured in a solid state.

### Melting Point and Coagulation Point

The melting point (expressed as Tₘₑₗₜ) and the coagulation point (expressed as T_{solid}) of measurement targets such as PPO, CBDAC, and PPO-CBDAC blend were measured at a temperature scan rate of 5 degrees C/min using a differential scanning calorimeter (manufactured by Shimadzu Corporation, product name: DSC-60). The melting point of PPO was 69 degrees C.

### Intersystem Crossing Quantum Yield

The intersystem crossing quantum yield Φ_{ISC} in benzene of CBDAC has been reported to be 92% (see D.P. Specht, P.A. Martic and S. Farid, Tetrahedron, 1982, 38, 1203).

### EXPLANATION OF CODES

10, 20, 20A, 30...organic film producing apparatus (optical upconversion organic film producing apparatus), 11, 21, 31...precursor holder, 12A...first clamping section, 12B...second clamping section, 13...first heating mechanism, 14...press mechanism (press section), 15, 25...decompression mechanism, 16, 26, 36...controller, 22A...first guide plate, 22B...second guide plate, 23...second heating mechanism, 24...moving mechanism, 31A...support plate, 31B...support plate, 32...roller pair, 33...roller heating mechanism (second heating mechanism), 111...powder precursor, 112A...glass substrate, 112B...glass substrate, 113...spacer, 114...holding space, 122...O-ring (buffer member), 131...first heating section, 131A, 131B...first rod heater, 132...second heating section, 132A, 132B...second rod heater, 133...cooling section, 134... temperature sensor, 135...heat insulator, 144... biasing member, 161...first heating drive circuit, 162...second heating drive circuit, 163...cooling drive circuit, 164...decompression drive circuit, 165... processor, 231...rod heater, 321...roller.

## Claims

1. A production method of an optical upconversion organic film, the method comprising:
holding a powder precursor containing a triplet sensitizer and an organic luminescent material in a holding space of a precursor holder, the holding space having a predetermined height;
applying pressure to the powder precursor along a height direction of the holding space; and
performing temperature control, in which a first temperature that is a temperature of a first end of the powder precursor and a second temperature that is a temperature of a second end of the powder precursor are raised by heating to or above a melting point of the organic luminescent material, and then are gradually lowered to below a coagulation point of the organic luminescent material while maintaining a temperature difference between the first temperature and the second temperature, given that a direction orthogonal to the height direction is defined as an axial direction, an end of the powder precursor close to one side of the axial direction is defined as the first end, and an end of the powder precursor close to the other side of the axial direction is defined as the second end.

2. The production method of the optical upconversion organic film according to claim 1, wherein a temperature-decrease rate to gradually decrease a temperature of the powder precursor is preset relative to the temperature difference, and the temperature-decrease rate is raised as the temperature difference increases.

3. A production method of an optical upconversion organic film, the method comprising:
holding a powder precursor containing a triplet sensitizer and an organic luminescent material in a holding space of a precursor holder, the holding space having a predetermined height;
applying pressure to the powder precursor along a height direction of the holding space; and
performing temperature control, in which given that a direction orthogonal to the height direction is defined as an axial direction, a heating member having a temperature gradient from a high temperature range to a low temperature range along the axial direction is moved in the axial direction relative to the precursor holder, the high temperature range being at or above a melting point of the organic luminescent material, the low temperature range being below a coagulation point of the organic luminescent material.

4. The production method of the optical upconversion organic film according to any one of claims 1 to 3, wherein in the applying the pressure to the powder precursor, an environment where the precursor holder is installed is decompressed and the pressure is applied to the powder precursor.

5. The production method of the optical upconversion organic film according to any one of claims 1 to 4, wherein a crystal of the organic luminescent material has uniaxial orientation.

6. The production method of the optical upconversion organic film according to any one of claims 1 to 5, wherein
the organic luminescent material contains an oxazole derivative, and
the triplet sensitizer contains a coumarin derivative.

7. An optical upconversion organic film producing apparatus configured to produce an optical upconversion organic film, the apparatus comprising:
a precursor holder having a holding space with a predetermined height, and configured to hold a powder precursor containing a triplet sensitizer and an organic luminescent material in the holding space;
a pair of clamping sections configured to clamp the precursor holder in a height direction;
a press section configured to apply pressure so that at least one of the pair of clamping sections is pressed toward the other of the pair of clamping sections; and
a first heating mechanism configured to raise a first temperature of the powder precursor and a second temperature of the powder precursor by heating to be different temperatures from each other to generate a temperature gradient along an axial direction, given that a direction orthogonal to the height direction is defined as the axial direction, an end of the powder precursor close to one side of the axial direction is defined as a first end, an end of the powder precursor close to the other side of the axial direction is defined as a second end, a temperature of the first end is defined as the first temperature, and a temperature of the second end is defined as the second temperature, wherein
the first heating mechanism is configured to raise the first temperature and the second temperature by heating to or above a melting point of the organic luminescent material, and then to gradually lower the first temperature and the second temperature to below a coagulation point of the organic luminescent material while maintaining a temperature difference between the first temperature and the second temperature.

8. The optical upconversion organic film producing apparatus according to claim 7, wherein the first heating mechanism includes
a first heating section provided at one side of the clamping sections in the axial direction,
a second heating section provided at the other side of the clamping sections in the axial direction, and configured to be drivable independently of the first heating section, and
a cooling section provided at the other side of the clamping sections in the axial direction and configured to cool the second end.

9. The optical upconversion organic film producing apparatus according to claim 8, wherein
the first heating section includes a first rod heater embedded in one side of each of the pair of the clamping sections in the axial direction, and
the second heating section includes a second rod heater embedded in the other side of each of the pair of the clamping sections in the axial direction.

10. The optical upconversion organic film producing apparatus according to any one of claims 7 to 9, wherein
the precursor holder includes a pair of substrates spaced apart in the height direction via a spacer, and the holding space is formed by a gap between the pair of substrates, and
the precursor holder and a buffer member are provided between the pair of clamping sections, the buffer member configured to absorb a stress in the height direction.

11. The optical upconversion organic film producing apparatus according to any one of claims 7 to 10, further comprising:
a decompression mechanism configured to maintain an environment surrounding the precursor holder, the pair of clamping sections, the press section, and the first heating mechanism in a decompressed state.

12. The optical upconversion organic film producing apparatus according to any one of claims 8 to 11, further comprising:
heat insulators provided in contact with respective surfaces of the pair of clamping sections, the respective surfaces being opposite to surfaces of the pair of clamping sections between which the precursor holder is clamped.

13. An optical upconversion organic film producing apparatus configured to produce an optical upconversion organic film, the apparatus comprising:
a precursor holder having a holding space with a predetermined height, and configured to hold a powder precursor containing a triplet sensitizer and an organic luminescent material in the holding space;
a pair of guide sections being members configured to sandwich the precursor holder by pressing the precursor holder in a height direction, the pair of guide sections being configured to guide the precursor holder so that the precursor holder is relatively movable along an axial direction, given that a direction orthogonal to the height direction is defined as the axial direction;
a second heating mechanism configured to heat the pair of guide sections to generate a temperature gradient from a high temperature range to a low temperature range along the axial direction, the high temperature range being at or above a melting point of the organic luminescent material, the low temperature range being below a coagulation point of the organic luminescent material; and
a moving mechanism configured to move the precursor holder in the axial direction relative to the pair of guide sections.

14. The optical upconversion organic film producing apparatus according to claim 13, wherein
the precursor holder includes a pair of substrates spaced apart in the height direction via a spacer, and the holding space is formed by a gap between the pair of substrates,
the pair of guide sections are a pair of guide plates configured to sandwich the precursor holder in the height direction,
the second heating mechanism is configured to heat the pair of guide plates to generate the temperature gradient in which portions facing each other of the pair of guide plates are at an identical temperature, and
the moving mechanism is configured to move the precursor holder relative to the pair of guide sections by press-fitting the precursor holder between the pair of guide palates in the axial direction.

15. The optical upconversion organic film producing apparatus according to claim 13, wherein
the precursor holder includes a pair of substrates spaced apart in the height direction via a spacer, and a pair of support plates configured to sandwich the pair of substrates, a length in the axial direction of the pair of support plates being longer than that of the pair of substrates, and the holding space is formed by a gap between the pair of substrates,
the pair of guide sections include roller pairs arranged in the axial direction, each of the roller pairs including rollers paired in the height direction and configured to rotate around a rotation axis orthogonal to the height direction and the axial direction, and the precursor holder is sandwiched between the rollers provided as a pair in the height direction,
the moving mechanism is configured to rotate the rollers to move the precursor holder in the axial direction relative to the pair of guide sections, and
the second heating mechanism is configured to individually control a temperature of each of the roller pairs arranged in the axial direction so that the roller pairs are arranged in order from the roller pair of the high temperature range to the roller pair of the low temperature range along the axial direction.

16. The optical upconversion organic film producing apparatus according to any one of claims 13 to 15, wherein the second heating mechanism is configured to heat the pair of guide sections so that the temperature gradient is generated in an order of the low temperature range, the high temperature range and the low temperature range along the axial direction.

17. An optical upconversion organic film, comprising:
a triplet sensitizer; and
an organic luminescent material, wherein
the organic luminescent material has ultraviolet luminescence, and
the optical upconversion organic film is a film having crystallinity.

18. The optical upconversion organic film according to claim 17, wherein
the triplet sensitizer absorbs excitation light to generate excited triplet excitons, and
the organic luminescent material emits light having a maximum peak in a shorter wavelength region relative to a local maximum peak wavelength closest to a long-wavelength region in an absorption spectrum of the triplet sensitizer, the shorter wavelength region being a wavelength region of 400 nm or less.

19. The optical upconversion organic film according to claim 17 or 18, wherein a crystal of the organic luminescent material has uniaxial orientation.

20. The optical upconversion organic film according to any one of claims 17 to 19, wherein the organic luminescent material contains an oxazole derivative.

21. The optical upconversion organic film according to any one of claims 17 to 20, wherein a fluorescence quantum yield of the organic luminescent material is 40% or more.

22. The optical upconversion organic film according to any one of claims 17 to 21, wherein the triplet sensitizer contains no metal atom in a molecule.

23. The optical upconversion organic film according to any one of claims 17 to 22, wherein the triplet sensitizer contains in a molecule only a hydrogen atom, a carbon atom, an oxygen atom, and a nitrogen atom.

24. The optical upconversion organic film according to any one of claims 17 to 23, wherein the triplet sensitizer contains a coumarin derivative.

25. The optical upconversion organic film according to any one of claims 17 to 24, wherein a molar ratio of the triplet sensitizer to the organic luminescent material is in a range from 1:1,000 to 1:100,000.
